(19) Europäisches Patentamt
European Patent Office
Office européen des brevets

(11) Veröffentlichungsnummer : **0 402 318 B1**

# (12) EUROPÄISCHE PATENTSCHRIFT

(45) Veröffentlichungstag der Patentschrift : **20.04.94 Patentblatt 94/16**

(51) Int. Cl.$^5$ : **C09B 62/463**

(21) Anmeldenummer : **90810394.8**

(22) Anmeldetag : **29.05.90**

## (54) Verfahren zur Herstellung von faserreaktiven Formazanverbindungen.

(30) Priorität : **08.06.89 CH 2153/89**

(43) Veröffentlichungstag der Anmeldung : **12.12.90 Patentblatt 90/50**

(45) Bekanntmachung des Hinweises auf die Patenterteilung : **20.04.94 Patentblatt 94/16**

(84) Benannte Vertragsstaaten : **CH DE FR GB LI**

(56) Entgegenhaltungen :
**EP-A- 0 043 465**
**EP-A- 0 352 222**

(73) Patentinhaber : **CIBA-GEIGY AG**
**Klybeckstrasse 141**
**CH-4002 Basel (CH)**

(72) Erfinder : **Brinkmann, Claudius, Dr.**
**5315 Hagerstown**
**Baton Rouge, LA 70817 (US)**

**EP 0 402 318 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Aminoformazanverbindungen sowie deren weitere Umsetzung zu faserreaktiven Formazanfarbstoffen.

Es ist bereits z.B. aus der EP-A 0 280 139 bekannt, Aminoformazanfarbstoffe durch Umsetzung von einem Arylhydrazon mit einem diazotierten o-Hydroxyaminobenzol herzustellen; im Endprodukt vorhandene Aminogruppen müssen dabei vor der Reaktion z.B. mittels Acetylierung geschützt und die Acetyl-Schutzgruppe anschliessend wieder abgespalten werden. Bei dieser Vorgehensweise wirkt sich nachteilig aus, dass die Abspaltung der Acetylgruppe im alkalischen Medium nur sehr langsam abläuft und dieser Schritt dementsprechend lange Reaktionszeiten beansprucht. Ein weiterer Nachteil der bekannten Verfahren ergibt sich für den Fall, dass der Aminoformazanfarbstoff anschliessend mit Hydrolyse-empfindlichen faserreaktiven Verbindungen, z.B. Halotriazinen und insbesondere Fluorotriazinen, umgesetzt werden soll: Will man erhebliche Ausbeuteverluste an Reaktivfarbstoff, hervorgerufen durch Hydrolyse des Reaktivrestes, vermeiden, so ist es notwendig, die bei der alkalischen Hydrolyse anfallenden Acetationen vor der weiteren Umsetzung mittels zum Teil aufwendiger Reinigungs- und Trennverfahren zu entfernen.

Es besteht daher das Bedürfnis nach einem verbesserten Herstellungsverfahren für Aminoformazanverbindungen, welches die genannten Probleme umgeht und insbesondere die Synthese von Aminoformazanverbindungen und deren weitere Umsetzung zu Reaktivfarbstoffen mit einer besonders hohen Raum-Zeit-Ausbeute ermöglicht.

Es wurde nun gefunden, dass man Aminoformazanverbindungen, die gegebenenfalls ohne weitere Reinigung zu Reaktivfarbstoffen weiterverarbeitet werden können, mit deutlich verbesserter Raum-Zeit-Ausbeute synthetisieren kann, wenn man anstelle einer Acetylierung die Aminogruppe(n) durch Carbamatbildung schützt.

Gegenstand der Erfindung ist daher ein Verfahren zur Herstellung von faserreaktiven Formazanverbindungen, die in Form der freien Säure der Formel

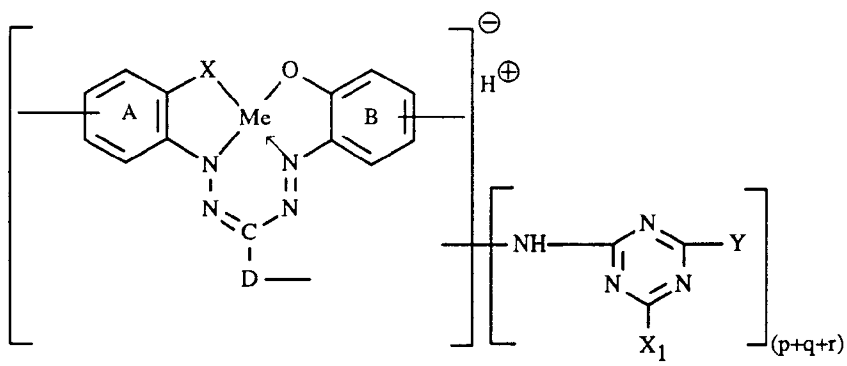 (1)

entsprechen und 1 bis 4 Sulfogruppen aufweisen, worin

D der Rest eines gegebenenfalls weitersubstituierten Benzols oder Naphthalins oder der Rest einer heterocyclisch-aromatischen Verbindung ist,

X eine Sulfogruppe oder eine Oxy- oder Carbonyloxygruppe bedeutet,

Me ein Schwermetallion der Atomnummern 24 bis 30 darstellt,

p, q und r unabhängig voneinander jeweils die Zahl 0 oder 1 bedeuten, wobei die Summe von (p+q+r) 1 oder 2 ist, $X_1$ Halogen darstellt, Y unabhängig die Bedeutung von $X_1$ hat oder einen Amino- oder Alkoxyrest bedeutet und die Ringe (A) und (B) neben den eingezeichneten Gruppen weitere Substituenten tragen können, dadurch gekennzeichnet, dass man

a) eine Verbindung der Formel

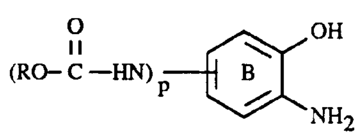 (2)

diazotiert, mit einer Kupplungskomponente der Formel

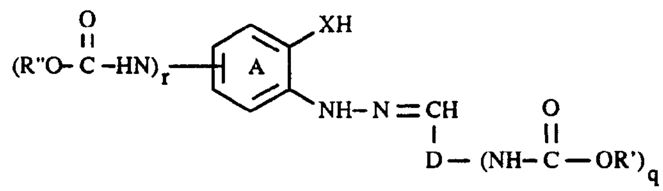

(3)

kuppelt und vor, während oder nach der Kupplungsreaktion ein Schwermetall Me-abgebendes Mittel zusetzt,

b) die gemäss a) erhaltene Formazanverbindung, die in Form der freien Säure der Formel

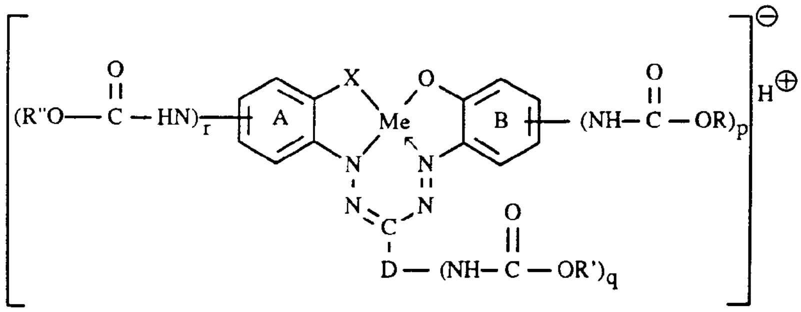

(13a)

entspricht, alkalisch verseift, und

c) die gemäss b) erhaltene Verbindung der Formel

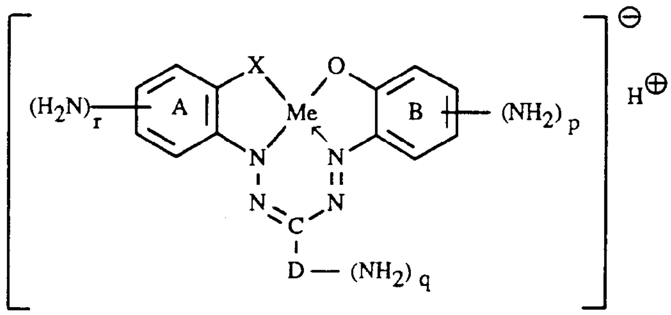

(13),

mit mindestens (p+q+r) Aequivalenten einer Verbindung der Formel

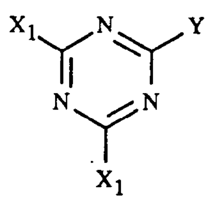

(8)

umsetzt, wobei D, X, $X_1$, Y, Me, p, q, r, (A) und (B) jeweils die unter der Formel (1) angegebene Bedeutung haben, R, R' und R" unabhängig voneinander je gegebenenfalls substituiertes $C_1$-$C_4$-Alkyl, gegebenenfalls substituiertes Aryl oder $C_7$-$C_{12}$-Aralkyl sind und wobei die Komponenten der Formeln (2) und (3) so gewählt werden, dass die resultierende Formazanverbindung der Formel (1) 1 bis 4 Sulfo-Gruppen enthält.

Steht D in Formel (1) für den Rest eines Benzols oder Naphthalins, handelt es sich z.B. um einen Benzol- oder Naphthalinrest, welcher ausser durch -$(NH_2)_q$ zusätzlich durch weitere Reste substituiert sein kann; geeignete Substituenten am Rest D sind z.B.: $C_1$-$C_4$-Alkyl, worunter generell Methyl, Ethyl, n- oder iso-Propyl, oder n-, iso-, sec.- oder tert.-Butyl zu verstehen ist; $C_1$-$C_4$-Alkoxy, womit generell Methoxy, Ethoxy, n- oder iso-Propoxy oder n-, iso-, sec.- oder tert.-Butoxy umfasst ist; Halogen wie Fluor, Chlor oder Brom; Hydroxy; Carboxy; $C_2$-$C_5$-Alkoxycarbonyl, z.B. Methoxy- oder Ethoxycarbonyl; $C_2$-$C_5$-Alkanoylamino, z.B. Acetylamino

oder Propionylamino; Sulfo; Nitro; Cyano; Trifluormethyl.

Der Benzol- oder Napthalinrest D in Formel (1) trägt vorzugsweise ausser $-(NH_2)_q$ keine weiteren Substituenten oder ist z.B. durch Sulfo, Chlor, Methyl und/oder Methoxy weitersubstituiert.

D in Formel (1) steht besonders bevorzugt für den Rest eines Benzols, das ausser $-(NH_2)_q$ keine weiteren Substituenten trägt oder durch Sulfo weitersubstituiert ist.

Bedeutet D in Formel (1) den Rest einer heterocyclisch-aromatischen Verbindung, so kann dies z.B. der Rest eines Furans, Thiophens, Pyrrols, Imidazols, Pyrazols, Pyridins, Chinolins oder Benzimidazols sein.

Die Ringe (A) und (B) können ausser den in Formel (1) genannten Gruppen weitere Substituenten tragen. Beispiele sind Halogen, $C_1$-$C_4$-Alkyl, $C_1$-$C_4$-Alkoxy, Nitro, Cyano, Trifluormethyl, Carboxy, Sulfo, Sulfamoyl, N-Mono- oder N,N-Di-$C_1$-$C_4$-Alkylsulfamoyl, $C_1$-$C_4$-Alkylsulfonyl, z.B. Methyl- oder Ethylsulfonyl, Phenylsulfonyl und Phenoxy.

Die Ringe (A) und (B) in Formel (1) tragen unabhängig voneinander vorzugsweise ausser $-(NH_2)_r$ bzw. $-(NH_2)_p$ keine weiteren Substituenten oder sind z.B. durch Sulfo, Nitro, Chlor, Methyl und/oder Methoxy weitersubstituiert.

Besonders bevorzugt tragen die Ringe (A) und (B) in Formel (1) ausser $-(NH_2)_r$ bzw. $-(NH_2)_p$ keine weiteren Substituenten oder sind durch Sulfo weitersubstituiert.

X steht vorzugsweise für die Oxygruppe und besonders bevorzugt für die Carbonyloxygruppe.

Bei Me handelt es sich z.B. um ein Chrom-, Kobalt-, Nickel-, Zink-, Mangan- und besonders bevorzugt um ein Kupferion.

Die Verbindungen der Formel (1) weisen z.B. 1 bis 4, vorzugsweise 2 oder 3, und besonders bevorzugt 2 Sulfogruppen auf; diese können am Ring (A), Ring (B) und/oder am Rest D lokalisiert sein.

p, q und r stehen unabhängig voneinander jeweils vorzugsweise für die Zahl 0 oder 1, wobei die Summe von (p+q+r) gleich der Zahl 1 ist.

Eine bevorzugte Ausführungsform des erfindungsgemässen Verfahrens betrifft die Verwendung von Verbindungen der Formeln (2) und (3), worin q 0 ist und eine der Variablen p und r für die Zahl 1 und die andere für die Zahl 0 steht; hierbei ist es insbesondere bevorzugt, dass q und r je die Zahl 0 bedeuten und p für die Zahl 1 steht.

$X_1$ steht als Halogen z.B. für Chlor oder Fluor.

Geeignete Aminoreste Y sind z.B.:
Amino, N-$C_1$-$C_4$-Alkyl- oder N,N-Di-$C_1$-$C_4$-Alkylamino, wobei das Alkyl gegebenenfalls durch Sulfo, Sulfato, Hydroxy, Carboxy oder Phenyl substituiert ist, Cyclohexylamino, Phenyl- oder Naphthylamino, welches gegebenenfalls durch $C_1$-$C_4$-Alkyl, $C_1$-$C_4$-Alkoxy, Amino, Carboxy, Sulfo und/oder Halogen substituiert ist, N-$C_1$-$C_4$-Alkyl-N-phenylamino, wobei das Alkyl und Phenyl jeweils unsubstituiert oder unabhängig voneinander z.B. wie oben geschildert substituiert sind, Morpholino oder ein Rest der Formel

$$-NR_6\text{-(alk-O)}_w\text{-alk'-}SO_2\text{-Z} \qquad (9),$$

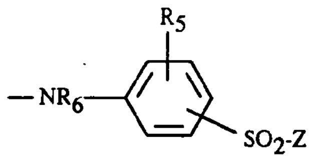

(10)

oder

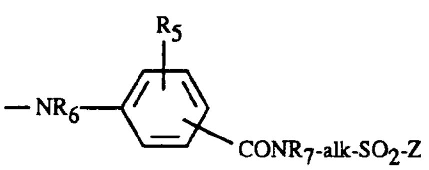

(11)

worin $R_6$ und $R_7$ unabhängig voneinander je Wasserstoff oder $C_1$-$C_4$-Alkyl sind, alk und alk' unabhängig voneinander $C_2$-$C_6$-Alkylen, z.B. n- oder iso-Propylen, n-Butylen, Pentylen, Hexylen und insbesondere Ethylen, bedeuten, w 0 oder 1 ist, Z Vinyl oder einen Rest der Formel $-CH_2-CH_2-Y_1$ bedeutet, $Y_1$ für eine Abgangsgruppe, z.B. -Cl, -Br, $-OSO_3H$, $-SSO_3H$, $-OPO_3H_2$, $-OCO-CH_3$ oder $OCO-C_6H_5$, steht und $R_5$ Wasserstoff, Sulfo, Methoxy oder Methyl ist.

Handelt es sich bei Y um einen Alkoxyrest, so ist dies z.B. ein $C_1$-$C_4$-Alkoxyrest.

Beispiele für geeignete Amino- und Alkoxyreste Y sind somit Amino, Methylamino, Ethylamino, β-Hydroxyethylamino, N,N-Di-β-hydroxyethylamino, β-Sulfoethylamino, Cyclohexylamino, Morpholino, o-, m- oder p-Methylphenylamino, o-, m oder p-Methoxyphenylamino, o-, m- oder p-Chlorphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Ethyl-N-phenylamino, N-Methyl-N-phenylamino, Methoxy, Ethoxy, n- oder iso-Propoxy, 2-(2'-Sulfatoethylsulfonyl)-ethylamino, 2-(2'-Chlorethylsulfonyl)-ethylamino, 2-(Vinylsulfonyl)-ethylamino, 2-[2'-(2"-Chlorethylsulfonyl)-ethoxy]-ethylamino, 2-(2'-Vinylsulfonylethoxy)-ethylamino, 3- oder 4-(2'-Sulfatoethylsulfonyl)-phenylamino, 3-(Vinylsulfonyl)-6-sulfophenylamino, 3- oder 4-[2'-(2"-Chlorethylsulfonyl)-ethylaminocarbonyl]-phenylamino, 3-[2'-(2"-Chlorethylsulfonyl)-ethylaminocarbonyl]-6-sulfophenylamino.

Vorzugsweise steht Y für den Rest $-NH_2$ oder für einen Rest der Formel

$$-NH-(CH_2-CH_2-O-)_wCH_2-CH_2-Z' \qquad (9')$$

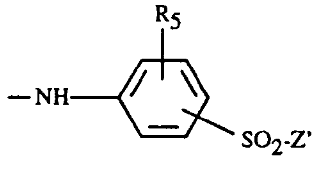

(10')

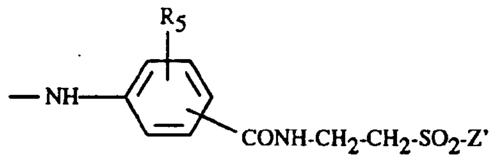

(11')

oder

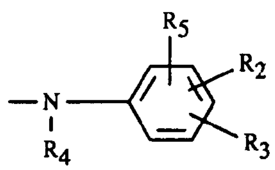

(12),

worin $R_5$ die zuvor angegebene Bedeutung hat, Z' Vinyl oder ein Rest $-CH_2-CH_2-Y'_1$ ist, $Y'_1$ -Cl, $-OSO_3H$ oder $-OCOCH_3$ bedeutet, $R_2$ und $R_3$ unabhängig voneinander Wasserstoff, Sulfo, Carboxy, Amino, Chlor, Methoxy oder Methyl sind, $R_4$ Wasserstoff oder $C_1$-$C_4$-Alkyl bedeutet und w für 0 oder 1 steht.

Das erfindungsgemässe Verfahren ist insbesondere geeignet für die Herstellung von Verbindungen, die in Form der freien Säure der Formel

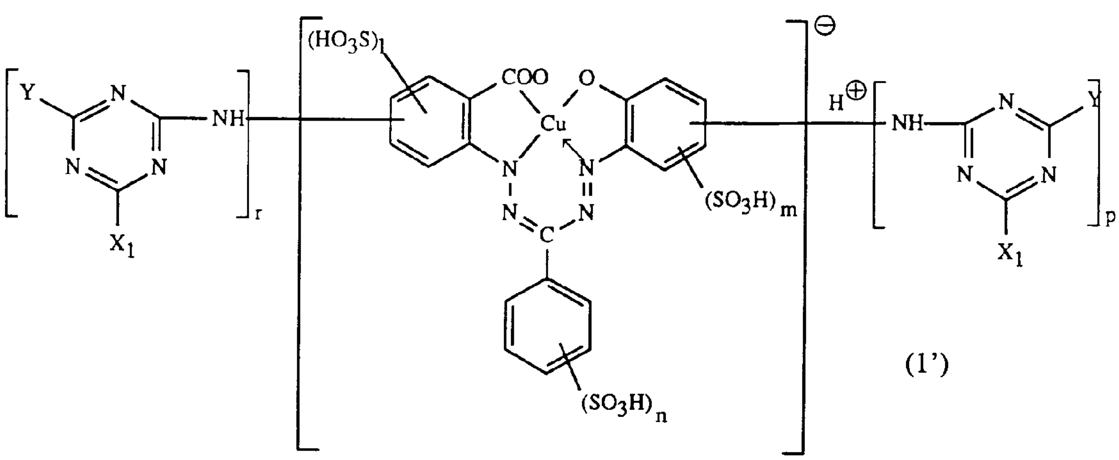

(1')

entsprechen, worin für $X_1$ und Y die genannten Bedeutungen und Bevorzugungen gelten, l, m und n unabhängig voneinander die Zahl 0, 1 oder 2 bedeuten und die Summe von (l+m+n) gleich eine ganze Zahl von 1 bis 4, bevorzugt 2 oder 3 und besonders bevorzugt 2 ist, und eine der beiden Variablen p und r die Zahl 1 und die andere die Zahl 0 bedeutet.

Stehen R, R' und/oder R" in den Verbindungen der Formel (2), (3) oder (13a) für gegebenenfalls substituiertes $C_1$-$C_4$-Alkyl, handelt es sich z.B. um unsubstituiertes oder z.B. durch Hydroxy, Carboxy, Cyano, Sulfo, Sulfato oder Halogen substituiertes Methyl, Ethyl, n- oder iso-Propyl oder n-, iso-, sec.- oder tert.-Butyl.

R, R' und R" stellen hierbei unabhängig voneinander bevorzugt unsubstituiertes $C_1$-$C_4$-Alkyl dar; bei R, R' und R" als Alkyl handelt es sich besonders bevorzugt um Methyl, Ethyl, n-Propyl oder iso-Propyl und insbesondere bevorzugt um Ethyl.

Stehen R, R' und/oder R" für gegebenenfalls substituiertes Aryl, handelt es sich z.B. um unsubstituiertes oder z.B. durch $C_1$-$C_4$-Alkyl, $C_1$-$C_4$-Alkoxy, Halogen, Sulfo und/oder Carboxy substituiertes Naphthyl oder Phenyl.

R, R' und R" stellen als Aryl bevorzugt unsubstituiertes oder durch Methyl, Ethyl, Methoxy, Ethoxy, Chlor und/oder Sulfo substituiertes Phenyl und besonders bevorzugt unsubstituiertes Phenyl dar.

Stehen R, R' und/oder R" für Aralkyl, so ist dies z.B. Benzyl.

In einer besonders bevorzugten Ausführungsform der vorliegenden Erfindung setzt man Verbindungen der Formel (2) und (3), worin R, R' und/oder R" Phenyl oder insbesondere Ethyl sind, in das Verfahren ein.

Die Reste R, R' und R" können verschieden oder gleich sein und sind vorzugsweise gleich.

Die Verbindungen der Formel (2) mit p = 1 können in an sich bekannter Weise durch Acylierung einer Verbindung der Formel

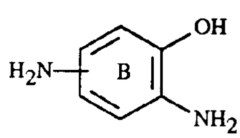

(4)

mit einer Verbindung der Formel

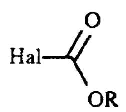

(5),

worin Hal Halogen, z.B. Brom und insbesondere Chlor bedeutet und (B) und R die zuvor angegebene Bedeutung haben, erhalten werden.

Die Acylierung findet dabei z.B. in einem wässrigen oder wässrig-organischen Medium bei einer Temperatur von -5 bis 50°C und vorzugsweise 0 bis 30°C statt, wobei der pH-Wert neutral bis leicht sauer gehalten wird. Als gut gangbar erweist sich insbesondere der pH-Bereich von 3 bis 5; die Einstellung entsprechender pH-Werte kann z.B. durch Zugabe von Ammonium- oder Alkalimetallbasen, z.B. Ammoniak, Lithium-, Natrium- oder Kaliumhydroxid oder die entsprechenden Carbonate, erfolgen.

Der Ameisensäureester der Formel (5) wird vorzugsweise in äquimolaren Mengen oder in geringem Ueberschuss, bezogen auf die Verbindung der Formel (4), eingesetzt.

Die Verbindungen der Formel (2), worin p = 1 ist, werden vorteilhaft direkt nach ihrer Herstellung ohne Reinigung und/oder Isolierung gemäss Verfahrensschritt a) weiterverarbeitet. Die Verbindungen der Formel (2) mit p = 0 sind an sich bekannt.

Die Kupplungskomponenten der Formel (3) können in an sich bekannter Weise hergestellt werden. Man erhält sie z.B., indem man einen Aldehyd der Formel

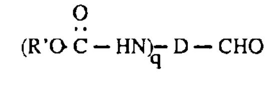

(6),

worin, D, R' und q jeweils die zuvor angegebene Bedeutung haben, mit einem Hydrazin der Formel

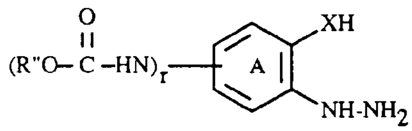

(7),

worin (A), R", X und r jeweils die zuvor angegebene Bedeutung haben, zu einem Arylhydrazon der Formel (3) kondensiert. Die Kondensation der Aldehyde der Formel (6) mit den Hydrazinen der Formel (7) erfolgt sehr leicht, z.B. durch Erwärmen in wässriger oder organischer Lösung.

Die Verbindungen der Formeln (6) und (7), worin q und r jeweil 0 sind, sind an sich bekannt oder können nach an sich bekannten Methoden hergestellt werden.

Die Verbindungen der Formeln (6) und (7), worin q bzw. r 1 ist, können analog zu der für die Diazokomponenten beschriebenen Prozedur durch Acylierung einer Verbindung der Formel

$$H_2N\text{-}D\text{-}CHO \qquad (6a)$$

bzw.

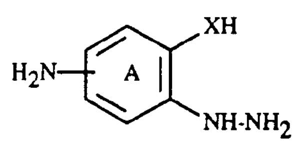

(7a)

mit einer Verbindung der Formel

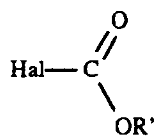

(5a)

bzw. einer Verbindung der Formel

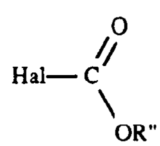

(5b)

hergestellt werden; dabei haben Hal, R', R", (A), D und X in den Formeln (5a), (5b), (6a) und (7a) jeweils die zuvor angegebene Bedeutung.

Die Ameisensäureester der Formel (5a) bzw. (5b) werden im allgemeinen mindestens in äquimolaren Mengen und vorzugsweise in einem bis zu 5fachen molaren Ueberschuss, bezogen auf die Verbindung der Formel (6a) bzw. (7a) eingesetzt; als besonders günstig erweist sich ein 10 bis 50 Mol% und vorzugsweise 15 bis 35 Mol-% betragender Ueberschuss der Verbindung der Formel (5a) bzw. (5b) relativ zur Verbindung der Formel (6a) bzw. (7a).

Die Verbindungen der Formeln (6) und (7), worin p 1 ist, werden vorteilhaft direkt nach ihrer Herstellung ohne Reinigung und/oder Isolierung gemäss Verfahrensschritt a) weiterverarbeitet.

Die Verbindung der Formel (2) wird in an sich bekannter Weise, etwa mit einem Nitrit, z.B. mit einem Alkalimetallnitrit wie Natriumnitrit, unter sauren Bedingungen, vorzugsweise in salzsaurem Medium, bei Temperaturen von -5 bis 25°C und vorzugsweise 0 bis 10°C, diazotiert.

Man setzt das Amin der Formel (2) vorteilhaft in etwa stöchiometrischen Mengen, bezogen auf die Kupplungskomponente der Formel (3), ein.

Der Kupplungsschritt wird ebenfalls unter üblichen, an sich bekannten, Bedingungen durchgeführt. Man arbeitet zweckmässig bei einem leicht sauren, neutralen oder leicht alkalischen pH-Wert und Temperaturen von ca. 0 bis 40°C und vorzugsweise 5 bis 30°C. Bevorzugt ist für die Kupplungsreaktion ein in etwa neutrales Medium, welches z.B. einen pH-Wert von 6 bis 8 aufweist; die Einstellung des pH-Werts kann z.B. durch Zugabe von Ammonium- oder Alkalimetallbasen, z.B. Ammoniak, Lithium-, Natrium- oder Kaliumhydroxid oder die entsprechenden Carbonate, erfolgen.

Das Reaktionsgemisch wird vor, während oder nach der Kupplung mit einem Schwermetall-abgebenden Mittel versetzt; hierbei ist es bevorzugt, letzteres zusammen mit einem der Reaktionspartner, z.B. der Kupplungskomponente der Formel (3) oder der diazotierten Verbindung der Formel (2), in die Kupplungsreaktion einzusetzen oder aber das Schwermetallabgebende Mittel während der Kupplung zuzusetzen.

Als Schwermetall Me abgebende Mittel verwendet man die üblichen, zweckmässig wasserlöslichen, einfachen oder komplexen Salze der Schwermetalle der Atomnummern 24 bis 30 von organischen oder anorganischen Säuren. Dabei kommen z.B. die wasserlöslichen Chrom-, Kobalt-, Nickel-, Zink-, Mangan- und vor allem die Kupfersalze von Mineralsäuren oder niederen Fettsäuren in Betracht.

Beispiele sind: Chromfluorid, -sulfat, -acetat, -formiat oder -salicylat; Kobaltacetat, -sulfat oder -chlorid; Nickelacetat, -formiat, -sulfat oder -chlorid; Zinksulfat oder -chlorid; Kupfercarbonat, -chlorid, -sulfat oder -acetat.

Besonders bevorzugt ist die Verwendung von Kupfersalzen und hierbei insbesondere die Verwendung von Kupfersulfat oder -acetat.

Das Schwermetall-abgebende Mittel wird vorzugsweise in etwa stöchiometrischen Mengen verwendet, sodass pro Mol Farbstoff ein Atom Schwermetall vorhanden ist.

Die Metallisierung geht üblicherweise schon bei Raumtemperatur quantitativ vor sich; vielfach ist aber ein Erwärmen bis auf ca. 80°C erforderlich. Man führt die Metallisierung zweckmässig bei einem pH-Wert von 4 bis 8 durch.

Die Verseifung der Verbindung der Formel (13a) gemäss Schritt b) wird vorzugsweise bei erhöhter Temperatur, z.B. bei 50 bis 120°C, vorzugsweise bei 60 bis 100°C und besonders bevorzugt bei 80 bis 100°C, durchgeführt. Man verwendet zweckmässig ein stark alkalisches Medium, welches z.B. einen pH-Wert von 12 bis 14 und vorzugsweise 13 bis 14 aufweist. Das alkalische Medium wird z.B. mittels einer Alkalibase, z.B. Lithium-, Kalium- oder vorzugsweise Natriumhydroxid, welche im Ueberschuss eingesetzt wird, hergestellt.

Die für die vollständige Verseifung benötigte Zeit beträgt z.B. 30 Minuten bis 2 Stunden, vorzugsweise 30 bis 90 Minuten und besonders bevorzugt 30 bis 60 Minuten.

Die Verbindungen der Formel (13) können aus dem gemäss b) anfallenden Reaktionsgemisch in üblicher Weise, z.B. mittels Aussalzens, Filtration, Kristallisation, Extraktion, Waschen usw. isoliert und gereinigt werden, wobei sie in Fom ihrer Salze, insbesondere Alkali-, vor allem Lithium-, Natrium- oder Kaliumsalze, oder Ammoniumsalze anfallen.

Die Umsetzung der Aminoformazanverbindungen der Formel (13) mit den Triazinylverbindungen der Formel (8) zu den Reaktivfarbstoffen der Formel (1) ist an sich bekannt oder kann nach an sich bekannten Methoden durchgeführt werden.

Eine vorteilhafte Variante besteht darin, dass man das bei der Herstellung der Verbindungen der Formel (13) im Reaktionsschritt b) erhaltene Reaktionsgemisch ohne weitere Reinigung und/oder Isolierung der Aminoformazanverbindung direkt mit der Verbindung der Formel (8) umsetzt. Die Umsetzung erfolgt üblicherweise in einem wässrigen oder wässrig-organischen Medium bei Temperaturen von -10 bis 100°C und vorzugsweise 0 bis 50°C; der pH-Wert wird dabei vorteilhaft z.B. durch eine der zuvor genannten Basen neutral bis sauer gehalten; der bevorzugte pH-Bereich in diesem Kondensationsschritt liegt dementsprechend z.B. zwischen 3 und 7. Man setzt im allgemeinen pro im Molekül der Formel (13) vorhandener freier Aminogruppe mindestens 1 Aequivalent der Verbindung der Formel (8) ein; insgesamt werden also mindestens (p+q+r) Aequivalente der Verbindung der Formel (8) pro Aequivalent Verbindung der Formel (13) benötigt, wobei p, q und r jeweils die zuvor angegebene Bedeutung haben. Vorzugsweise wird jedoch die Verbindung der Formel (8) in einem gewissen Ueberschuss, bezogen auf die Verbindung der Formel (13), eingesetzt.

Eine bevorzugte Ausführungsform der vorliegenden Erfindung betrifft ein Verfahren zur Herstellung von Verbindungen der zuvor angegebenen Formel (13), welche 2 oder 3 Sulfogruppen aufweisen und worin D ein unsubstituierter oder durch Sulfo, Chlor, Methyl und/oder Methoxy substituierter Rest eines Benzols oder Naphthalins ist, die Ringe (A) und (B) unabhängig voneinander keine weiteren Substituenten tragen oder durch Sulfo, Nitro, Chlor, Methyl und/oder Methoxy weitersubstituiert sind, X die Oxy- oder Carbonyloxygruppe bedeutet, Me für ein Kupferion steht, p, q und r unabhängig voneinander jeweils die Zahl 0 oder 1 bedeuten, wobei die Summe von (p+q+r) gleich der Zahl 1 ist, $X_1$ Chlor oder Fluor ist, und Y Amino, N-$C_1$-$C_4$-Alkyl- oder N,N-Di-$C_1$-$C_4$-Alkylamino, wobei das Alkyl gegebenenfalls durch Sulfo, Sulfato, Hydroxy, Carboxy oder Phenyl substituiert ist, Cyclohexylamino, Phenyl- oder Naphthylamino, welches gegebenenfalls durch $C_1$-$C_4$-Alkyl, $C_1$-$C_4$-Alkoxy, Amino, Carboxy, Sulfo und/oder Halogen substituiert ist, N-$C_1$-$C_4$-Alkyl-N-phenylamino, wobei das Alkyl und Phenyl jeweils unsubstituiert oder unabhängig voneinander wie oben geschildert substituiert sind, Morpholino oder einen Rest der Formel

$$-NR_6-(alk-O)_w-alk'-SO_2-Z \qquad (9),$$

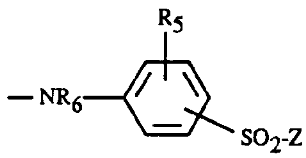

(10)

oder

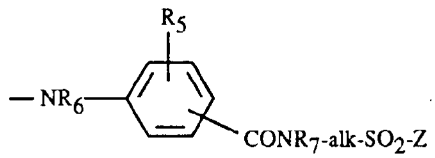

(11)

worin $R_6$ und $R_7$ unabhängig voneinander je Wasserstoff oder $C_1$-$C_4$-Alkyl sind, alk und alk' unabhängig voneinander $C_2$-$C_6$-Alkylen bedeuten, w 0 oder 1 ist, Z Vinyl oder einen Rest der Formel $-CH_2-CH_2-Y_1$ bedeutet, $Y_1$ für einen Rest -Cl, -Br, $-OSO_3H$, $-SSO_3H$, $-OPO_3H_2$, $-OCO-CH_3$ oder $OCO-C_6H_5$ steht und $R_5$ Wasserstoff, Sulfo, Methoxy oder Methyl ist, bedeutet, welches dadurch gekennzeichnet ist, dass man

a) eine Verbindung der Formel

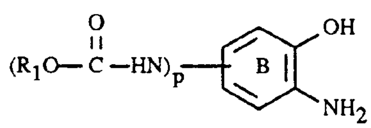

(2a)

in an sich bekannter Weise diazotiert, bei einer Temperatur von 0 bis 40°C und einem pH-Wert von 6 bis 8 mit einer Verbindung der Formel

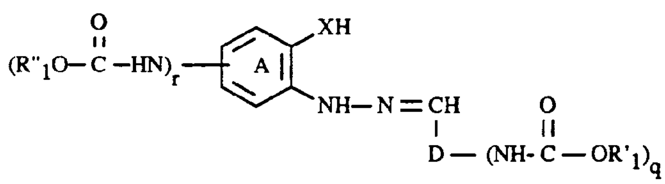

(3a)

kuppelt und vor, während oder nach der Kupplung eine Kupfer-abgebende Verbindung zusetzt,

b) die gemäss a) erhaltene Formazanverbindung, die in Form der freien Säure der Formel

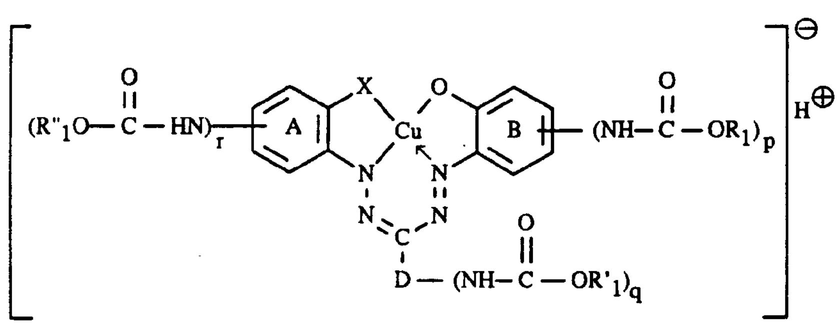

(13a')

entspricht, innerhalb von 30 Minuten bis 2 Stunden alkalisch bei einem pH-Wert von 12 bis 14 und einer Temperatur von 60 bis 100°C verseift, und

c) die gemäss b) erhaltene Aminoformazanverbindung bei einem pH-Wert von 3 bis 7 und einer Temperatur von 0 bis 50°C mit einer Verbindung

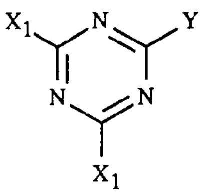

(8),

umsetzt, wobei D, (A), (B), X, $X_1$, Y, p, q und r jeweils die oben angegebene Bedeutung haben, $R_1$, $R'_1$ und $R''_1$ unabhängig voneinander je $C_1$-$C_4$-Alkyl oder unsubstituiertes oder durch Methyl, Ethyl, Methoxy, Ethoxy, Chlor und/oder Sulfo substituiertes Phenyl bedeuten und wobei die Komponenten der Formeln (2a) und (3a) so gewählt werden, dass die resultierende Formazanverbindung der Formel (1) 2 oder 3 Sulfogruppen enthält.

Eine besonders bevorzugte Ausführungsform der vorliegenden Erfindung betrifft ein Verfahren zur Herstellung von Verbindungen der zuvor angegebenen Formel (1'), welches dadurch gekennzeichnet ist, dass man

a) eine Verbindung der Formel

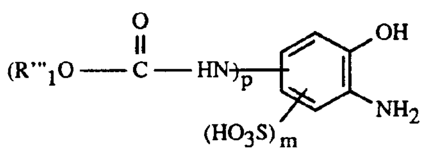

(2b)

in an sich bekannter Weise diazotiert, bei einer Temperatur von 0 bis 40°C und einem pH-Wert von 6 bis 8 mit einer Verbindung der Formel

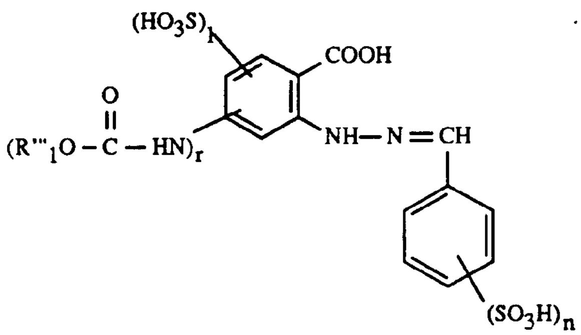

(3b)

kuppelt und vor oder während der Kupplungsreaktion ein Kupfersalz von Mineralsäuren oder niederen Fettsäuren zusetzt,

b) die gemäss a) erhaltene Formazanverbindung, die in Form der freien Säure der Formel

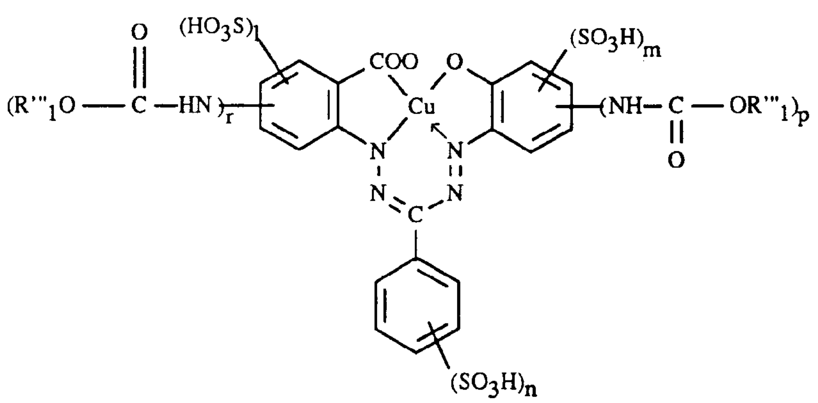

(13b')

entspricht, innerhalb von 30 Minuten bis 2 Stunden alkalisch bei einem pH-Wert von 12 bis 14 und einer Temperatur von 80 bis 100°C verseift, und

c) die gemäss b) erhaltene Aminoformazanverbindung bei einem pH-Wert von 3 bis 7 und einer Temperatur von 0 bis 50°C mit einer Verbindung der Formel

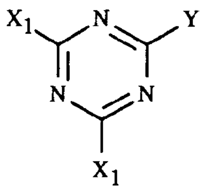

(8)

umsetzt, worin $R'''_1$ Ethyl oder Phenyl bedeutet, eine der Variablen p und r für die Zahl 1 und die andere für die Zahl 0 steht, $X_1$ Chlor oder Fluor ist und Y für einen Rest $-NH_2$ oder für einen Rest der Formel

$$-NH-(CH_2-CH_2-O-)_wCH_2-CH_2-Z' \qquad (9')$$

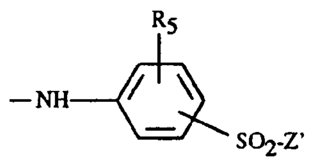

(10')

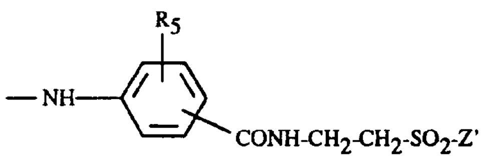

(11')

oder

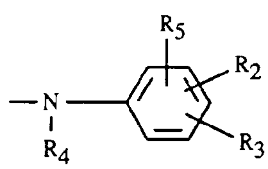

(12),

worin $R_5$ Wasserstoff, Sulfo, Methoxy oder Methyl bedeutet, Z' Vinyl oder ein Rest $-CH_2-CH_2-Y'_1$ ist, $Y'_1$ -Cl, $-OSO_3H$ oder $-OCOCH_3$ bedeutet, $R_2$ und $R_3$ unabhängig voneinander Wasserstoff, Sulfo, Carboxy, Amino, Chlor, Methoxy oder Methyl sind, $R_4$ Wasserstoff oder $C_1$-$C_4$-Alkyl bedeutet und w die Zahl 0 oder 1 darstellt, steht.

Die Reaktivfarbstoffe der Formel (1) eignen sich zum Färben und Bedrucken der verschiedensten Materialien, wie Seide, Leder, Wolle, Polyamidfasern und besonders cellulosehaltiger Fasermaterialien aller Art. Solche Fasermaterialien sind z.B. die natürlichen Cellulosefasern wie Baumwolle, Leinen und Hanf, Zellstoff und regenerierte Cellulose, sowie Mischfasern, die eine der genannten Fasern enthalten. Die Fasermaterialien liegen vorzugsweise als textile Fasermaterialien in den verschiedensten Verarbeitungszuständen vor. Die nach dem erfindungsgemässen Verfahren hergestellten Reaktivfarbstoffe sind den konventionell hergestellten im Hinblick auf die Applikation und Echtheiten ebenbürtig oder überlegen.

Nach dem erfindungsgemässen Verfahren lassen sich Aminoformazanverbindungen sowie als Folgereaktion faserreaktive Formazanfarbstoffe mit einer gegenüber bekannten Verfahren stark erhöhten Raum-Zeitausbeute herstellen; dies ist vor allem dadurch bedingt, dass die erfindungsgemässen Amino-Schutzgruppen zum einen nach erfolgter Kupplungsreaktion leicht wieder entfernt werden können und zum anderen eine gegebenenfalls nachfolgende Umsetzung mit hydrolyseempfindlichen Reaktivverbindungen nicht stören. Eine aufwendige Reinigung der Aminoformazanverbindung entfällt somit und letztere kann ohne jede Reinigung oder z.B. lediglich roh mit Salz ausgefällt und abfiltriert mit der Reaktivverbindung umgesetzt werden.

Die Verbindungen der zuvor angegebenen Formel (13a), ausgenommen solche, worin R" Methyl bedeutet,

sind neu und stellen einen weiteren Gegenstand der Erfindung dar.

Die nachfolgenden Beispiele dienen der Erläuterung der Erfindung.Teile bedeuten Gewichtsteile und Prozente Gewichtsprozente.

Beispiel 1:

132,6 g 2-Carboethoxyamido-6-aminophenol-4-sulfonsäure werden in salzsaurem Medium mit Natriumnitrit in an sich bekannter Weise diazotiert. In die Diazosuspension werden 120 g $CuSO_4 \cdot 5H_2O$ eingetragen und anschliessend der pH-Wert mit 30%-iger Natriumhydroxidlösung auf 7 gestellt. Man lässt die Cu-Ionen enthaltende Diazosuspension rasch zu einer 40°C warmen Lösung von 159,6 g des Hydrazons der Formel

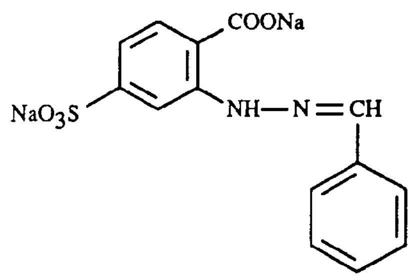

zulaufen, wobei der pH-Wert bei 7,2 bis 7,3 gehalten wird. Die Temperatur des Reaktionsgemisches stellt sich während des Zulaufs auf einen Wert von ca. 20°C ein. Nach Beendigung des Zulaufs lässt man noch 5 Minuten nachrühren und gibt anschliessend 40 ml 30%-ige Natriumhydroxidlösung zum Reaktionsgemisch; dieses wird anschliessend innerhalb von 30 bis 45 Minuten auf 100°C erhitzt und noch ca. 15 Minuten bei dieser Temperatur gehalten. Danach ist die Verseifung komplett, und der Aminoazofarbstoff wird nach dem Abkühlen auf ca. 70°C mit Natriumchlorid ausgesalzen. Anschliessend stellt man den pH-Wert mit konz. Salzsäure zunächst auf 7 und dann durch weiteres Zutropfen von konz. Salzsäure allmählich auf 4 ein. Man lässt eine Stunde nachrühren und filtriert dann das Produkt ab. Nach dem Trocknen erhält man die Verbindung der Formel

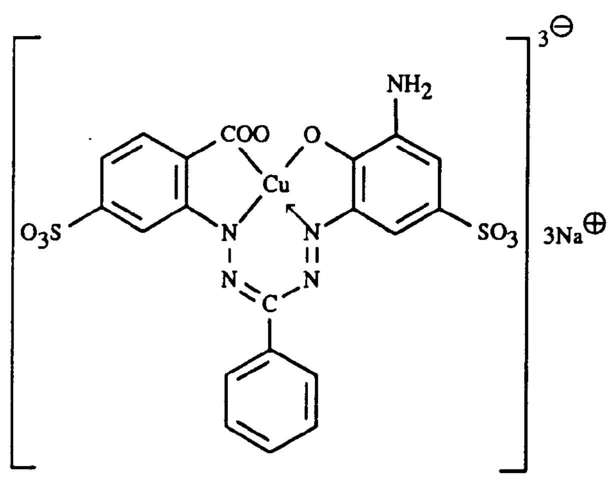

mit einer Ausbeute von 91 %.

105 Teile Cyanurfluorid werden bei 0 bis 5°C unter Rühren zu einer neutralen Lösung von 388 Teilen der oben hergestellten Aminoformazanverbindung in ca. 3000 Teilen Wasser zulaufen gelassen und der pH-Wert durch Zugabe von Natriumhydroxidlösung auf ca. 6 gehalten. Nach beendeter Cyanurfluorid-Zugabe setzt man 60 Teile 32%-ige Salzsäure zu und lässt ca. 30 Minuten nachrühren. Dann werden 133 Teile 2-(2-Aminoethoxy)-2'-chlordiethylsulfon-Hydrochlorid bei 0 bis 5°C zum Reaktionsgemisch gegeben, danach der pH-Wert mit Natriumhydroxidlösung auf 8 eingestellt und ca. 1,5 Stunden bei 0 bis 5°C und anschliessend ca. 15 Minuten bei ca. 15°C nachgerührt; während der Nachrührzeit wird der pH-Wert des Reaktionsgemisches durch Zugabe von Natriumhydroxidlösung bei 8 gehalten. Am Schluss wird der pH-Wert des Reaktionsgemisches durch Zugabe von Natriumhydroxid auf 10 eingestellt und ca. 20 Minuten bei diesem Wert gehalten. Der Formazanfarbstoff, der in Form der freien Säure der Formel

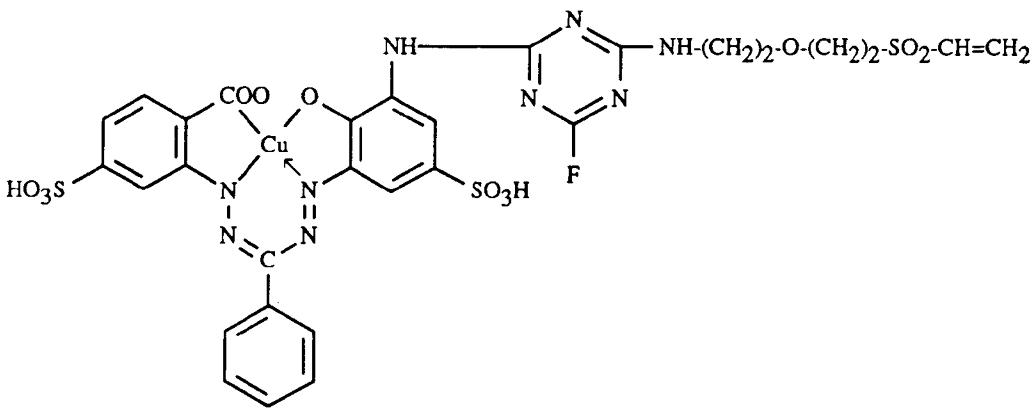

entspricht, wird in an sich bekannter Weise, z.B. mittels Sprühtrocknens oder Aussalzens, isoliert und gereinigt; die Ausbeute in diesem 2. Reaktionsschritt ist annähernd quantitativ.

Beispiele 2-11:

Verfährt man wie im Beispiel 1 beschrieben, verwendet jedoch äquivalente Mengen der aus der Tabelle ersichtlichen Komponenten (Hydrazinverbindung, Aldehyd-Komponente, Diazokomponente, Triazinverbindung und gegebenenfalls Amin), erhält man analoge faserreaktive Formazanverbindungen:

| Bsp. Nr. | Hydrazinverbindung | Aldehyd-Komponente | Diazokomponente | Triazinverbindung | Amin |
|---|---|---|---|---|---|
| 2 | 4-Carboethoxyamido-2-carboxyphenyl-hydrazin | Benzaldehyd-2-sulfonsäure | 2-Aminophenol-4,6-disulfonsäure | 2,4-Difluor-6-amino-s-triazin | — |
| 3 | 4-Carboethoxyamido-2-carboxyphenyl-hydrazin | Benzaldehyd-2-sulfonsäure | 2-Aminophenol-4,6-disulfonsäure | Cyanurchlorid | 3-Aminobenzoesäure-N'-β-(β'-chlorethylsulfonyl)-ethylamid |
| 4 | 2-Carboxy-5-sulfo-phenylhydrazin | Benzaldehyd-4-sulfonsäure | 4-Carboethoxyamido-6-aminophenol-2-sulfonsäure | Cyanurfluorid | β-(β'-Chlorethylsulfonyl)-ethyl-amin |
| 5 | 2-Carboxy-5-sulfo-phenylhydrazin | Benzaldehyd | 2-Carboethoxyamido-6-aminophenol-4-sulfonsäure | Cyanurfluorid | β-(β'-Chlorethylsulfonyl)-ethyl-amin |
| 6 | 2-Carboxy-4-sulfo-phenylhydrazin | 4-Carboethoxyamido-benzaldehyd-2-sulfon-säure | 2-Aminophenol-5-sulfonsäure | Cyanurchlorid | 2-(2-Aminoethoxy)-2'-chlordi-ethylsulfon |
| 7 | 2-Carboxy-5-sulfo-phenylhydrazin | Benzaldehyd | 2-Carboethoxyamido-6-aminophenol-4-sulfonsäure | Cyanurchlorid | 2-(2-Aminoethoxy)-2'-chlordi-ethylsulfon |
| 8 | 2-Carboxy-5-sulfo-phenylhydrazin | Benzaldehyd | 2-Carboethoxyamido-6-aminophenol-4-sulfonsäure | 2,4-Difluor-6-(3'-sulfophenylamino)-s-triazin | — |
| 9 | 2-Carboxy-5-sulfo-phenylhydrazin | Benzaldehyd | 2-Carboethoxyamido-6-aminophenol-4-sulfonsäure | Cyanurchlorid | Taurin |

| Bsp. Nr. | Hydrazinverbindung | Aldehyd-Komponente | Diazokomponente | Triazinverbindung | Amin |
|---|---|---|---|---|---|
| 10 | 2-Carboxy-4-sulfo-phenylhydrazin | Benzaldehyd | 2-Carboethoxyamido-6-aminophenol-4-sulfonsäure | Cyanurfluorid | 4-Aminobenzoesäure-N-β-(β'-chlorethylsulfonyl)-ethylamid |
| 11 | 2-Carboxy-5-sulfo-phenylhydrazin | Benzaldehyd | 2-Carboethoxyamido-6-aminophenol-4-sulfonsäure | Cyanurchlorid | 3-(β-Sulfatoethylsulfonyl)-anilin |

**Patentansprüche**

1. Verfahren zur Herstellung von faserreaktiven Formazanfarbstoffen, die in Form der freien Säure der Formel

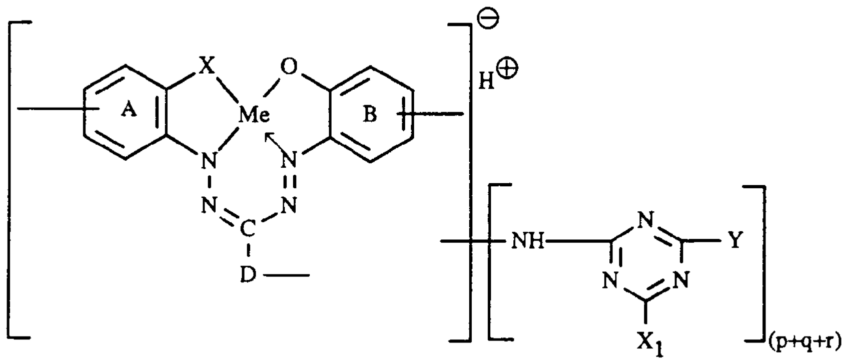

(1)

entsprechen und 1 bis 4 Sulfogruppen aufweisen, worin
D der Rest eines gegebenenfalls weitersubstituierten Benzols oder Naphthalins oder der Rest einer heterocyclisch-aromatischen Verbindung ist,
X eine Sulfogruppe oder eine Oxy- oder Carbonyloxygruppe bedeutet,
Me ein Schwermetallion der Atomnummern 24 bis 30 darstellt,
p, q und r unabhängig voneinander jeweils die Zahl 0 oder 1 bedeuten, wobei die Summe von (p+q+r) 1 oder 2 ist, $X_1$ Halogen darstellt, Y unabhängig die Bedeutung von $X_1$ hat oder einen Amino- oder Alkoxyrest bedeutet und die Ringe (A) und (B) neben den eingezeichneten Gruppen weitere Substituenten tragen können,
dadurch gekennzeichnet, dass man
a) eine Verbindung der Formel

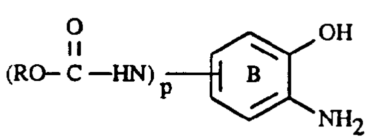

(2)

diazotiert, mit einer Kupplungskomponente der Formel

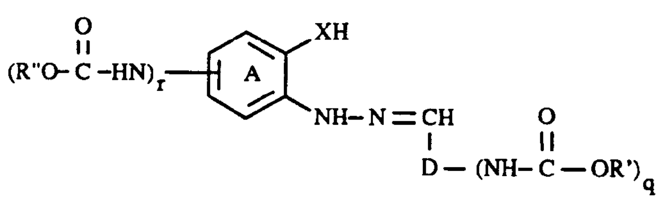

(3)

kuppelt und vor, während oder nach der Kupplungsreaktion ein Schwermetall Me-abgebendes Mittel zusetzt,
b) die gemäss a) erhaltene Formazanverbindung, die in Form der freien Säure der Formel

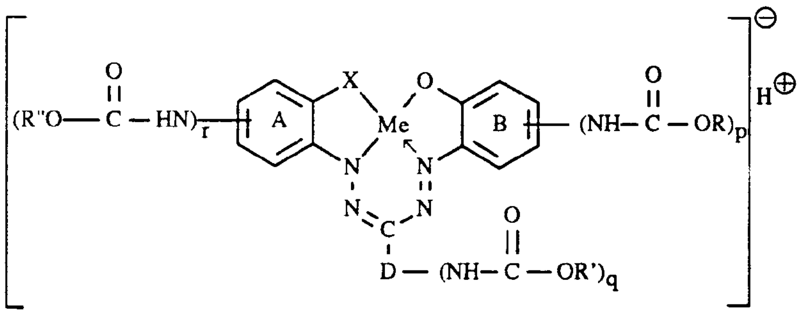

(13a)

entspricht, alkalisch verseift, und

c) die gemäss b) erhaltene Verbindung der Formel

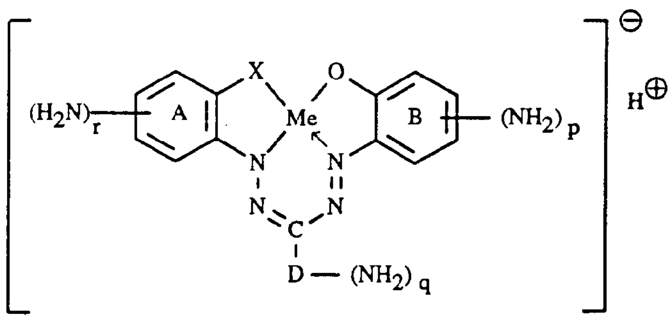

(13),

mit mindestens (p+q+r) Aequivalenten einer Verbindung der Formel

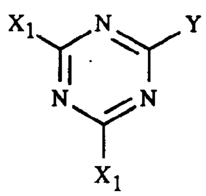

(8)

umsetzt, wobei D, X, $X_1$, Y, Me, p, q, r, (A) und (B) jeweils die unter der Formel (1) angegebene Bedeutung haben, R, R' und R" unabhängig voneinander je gegebenenfalls substituiertes $C_1$-$C_4$-Alkyl, gegebenenfalls substituiertes Aryl oder $C_7$-$C_{12}$-Aralkyl sind und wobei die Komponenten der Formeln (2) und (3) so gewählt werden, dass die resultierende Formazanverbindung der Formel (1) 1 bis 4 Sulfo-Gruppen enthält.

2. Verfahren gemäss Anspruch 1, dadurch gekennzeichnet, dass D ein unsubstituierter oder durch $C_1$-$C_4$-Alkyl, $C_1$-$C_4$-Alkoxy, Halogen, Hydroxy, Carboxy, $C_2$-$C_5$-Alkoxycarbonyl, $C_2$-$C_5$-Alkanoylamino, Sulfo, Nitro, Cyano und/oder Trifluormethyl substituierter Rest eines Benzols oder Naphthalins ist.

3. Verfahren gemäss Anspruch 1 oder 2, dadurch gekennzeichnet, dass D ein unsubstituierter oder durch Sulfo, Chlor, Methyl und/oder Methoxy substituierter Rest eines Benzols oder Naphthalins ist.

4. Verfahren gemäss einem der Ansprüche 1 bis 3, dadurch gekennzeichnet, dass D ein unsubstituierter oder durch Sulfo substituierter Rest eines Benzols ist.

5. Verfahren gemäss einem der Ansprüche 1 bis 4, dadurch gekennzeichnet, dass die Ringe (A) und (B) unabhängig voneinander jeweils keine weiteren Substituenten tragen oder durch Halogen, $C_1$-$C_4$-Alkyl, $C_1$-$C_4$-Alkoxy, Nitro, Cyano, Trifluormethyl, Carboxy, Sulfo, Sulfamoyl, N-Mono- oder N,N-Di-$C_1$-$C_4$-Alkylsulfamoyl, $C_1$-$C_4$-Alkylsulfonyl, Phenylsulfonyl und/oder Phenoxy weitersubstituiert sind.

6. Verfahren gemäss einem der Ansprüche 1 bis 5, dadurch gekennzeichnet, dass die Ringe (A) und (B) unabhängig voneinander keine weiteren Substituenten tragen oder durch Sulfo, Nitro, Chlor, Methyl und/oder Methoxy weitersubstituiert sind.

**7.** Verfahren gemäss einem der Ansprüche 1 bis 6, dadurch gekennzeichnet, dass die Ringe (A) und (B) unabhängig voneinander keine weiteren Substituenten tragen oder durch Sulfo weitersubstituiert sind.

**8.** Verfahren gemäss einem der Ansprüche 1 bis 7, dadurch gekennzeichnet, dass X die Oxygruppe oder vorzugsweise die Carbonyloxygruppe bedeutet.

**9.** Verfahren gemäss einem der Ansprüche 1 bis 8, dadurch gekennzeichnet, dass Me ein Chrom-, Kobalt-, Nickel-, Zink-, Mangan- oder Kupferion und vorzugsweise ein Kupferion bedeutet.

**10.** Verfahren gemäss einem der Ansprüche 1 bis 9, dadurch gekennzeichnet, dass die Verbindungen der Formel (1)2 oder 3 und vorzugsweise 2 Sulfogruppen aufweisen.

**11.** Verfahren gemäss einem der Ansprüche 1 bis 10, dadurch gekennzeichnet, dass die Summe von (p+q+r) gleich der Zahl 1 ist.

**12.** Verfahren gemäss Anspruch 11, dadurch gekennzeichnet, dass q 0 ist und eine der beiden Variablen p und r die Zahl 1 und die andere die Zahl Null bedeutet.

**13.** Verfahren gemäss Anspruch 1 zur Herstellung von Verbindungen, die in Form der freien Säure der Formel

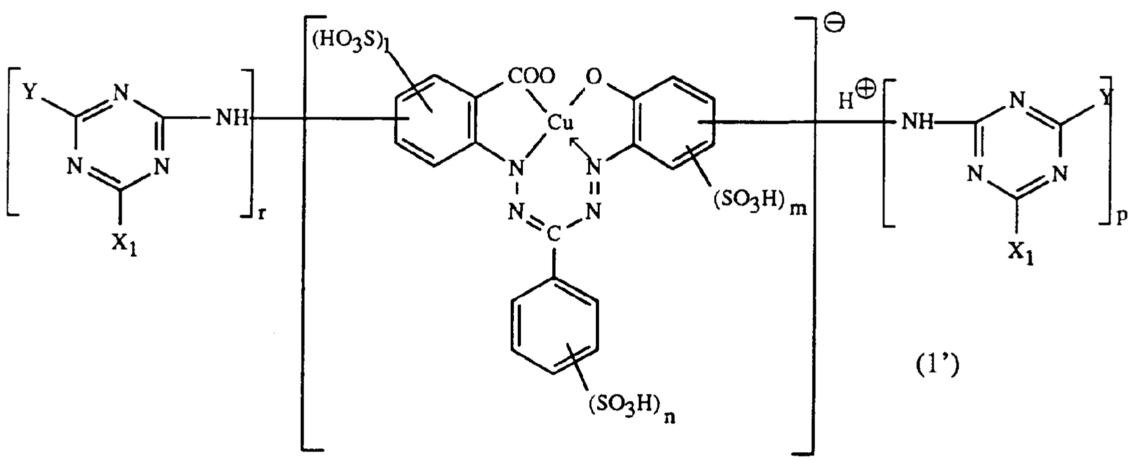

(1')

entsprechen, worin l, m und n unabhängig voneinander die Zahl 0,1 oder 2 bedeuten und die Summe von (l+m+n) gleich eine ganze Zahl von 1 bis 4, bevorzugt 2 oder 3 und besonders bevorzugt 2 ist, und eine der beiden Variablen p und r die Zahl 1 und die andere die Zahl 0 bedeutet.

**14.** Verfahren gemäss Anspruch 13, dadurch gekennzeichnet, dass p die Zahl 1 und r die Zahl 0 bedeuten.

**15.** Verfahren gemäss einem der Ansprüche 1 bis 14, dadurch gekennzeichnet, dass R, R' und R" unabhängig voneinander je unsubstituiertes oder durch Hydroxy, Carboxy, Cyano, Sulfo, Sulfato oder Halogen substituiertes $C_1$-$C_4$-Alkyl, unsubstituiertes oder durch $C_1$-$C_4$-Alkyl, $C_1$-$C_4$-Alkoxy, Halogen, Sulfo und/oder Carboxy substituiertes Phenyl oder Naphthyl oder Benzyl bedeuten.

**16.** Verfahren gemäss einem der Ansprüche 1 bis 15, dadurch gekennzeichnet, dass R, R' und R" unabhängig voneinander je $C_1$-$C_4$-Alkyl und bevorzugt Ethyl bedeuten.

**17.** Verfahren gemäss einem der Ansprüche 1 bis 15, dadurch gekennzeichnet, dass R, R' und R" unabhängig voneinander je unsubstituiertes oder durch Methyl, Ethyl, Methoxy, Ethoxy, Chlor und/oder Sulfo substituiertes Phenyl bedeuten.

**18.** Verfahren gemäss einem der Ansprüche 1 bis 15, dadurch gekennzeichnet, dass R, R' und R" je Ethyl oder Phenyl sind.

**19.** Verfahren gemäss einem der Ansprüche 1 bis 18, dadurch gekennzeichnet, dass Y Amino, N-$C_1$-$C_4$-Alkyl- oder N,N-Di-$C_1$-$C_4$-Alkylamino, wobei das Alkyl gegebenenfalls durch Sulfo, Sulfato, Hydroxy, Carboxy oder Phenyl substituiert ist, Cyclohexylamino, Phenyl- oder Naphthylamino, welches gegebenenfalls durch $C_1$-$C_4$-Alkyl, $C_1$-$C_4$-Alkoxy, Amino, Carboxy, Sulfo und/oder Halogen substituiert ist, N-$C_1$-$C_4$-Alkyl-N-phenylamino, wobei das Alkyl und Phenyl jeweils unsubstituiert oder unabhängig voneinander wie oben geschildert substituiert sind, Morpholino oder einen Rest der Formel

$$-NR_6-(alk-O)_w-alk'-SO_2-Z \qquad (9),$$

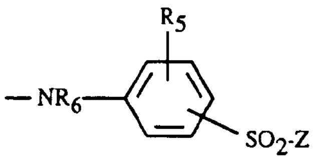

(10)

oder

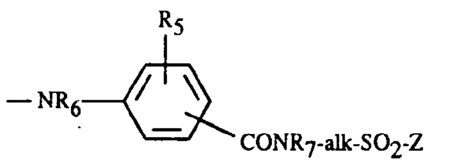

(11)

worin $R_6$ und $R_7$ unabhängig voneinander je Wasserstoff oder $C_1$-$C_4$-Alkyl sind, alk und alk' unabhängig voneinander $C_2$-$C_6$-Alkylen bedeuten, w 0 oder 1 ist, Z Vinyl oder einen Rest der Formel $-CH_2-CH_2-Y_1$ bedeutet, $Y_1$ für einen Rest -Cl, -Br, $-OSO_3H$, $-SSO_3H$, $-OPO_3H_2$, $-OCO-CH_3$ oder $OCO-C_6H_5$ steht und $R_6$ Wasserstoff, Sulfo, Methoxy oder Methyl ist, bedeutet.

**20.** Verfahren gemäss Anspruch 19, dadurch gekennzeichnet, dass Y für einen Rest $-NH_2$ oder für einen Rest der Formel

$$-NH-(CH_2-CH_2-O-)_wCH_2-CH_2-Z' \qquad (9')$$

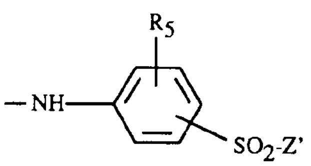

(10')

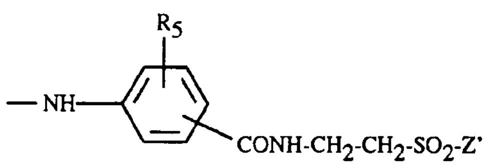

(11')

oder

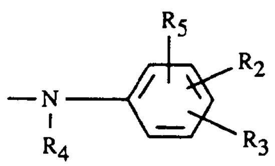

(12),

worin $R_5$ die im Anspruch 19 angegebene Bedeutung hat, Z' Vinyl oder ein Rest $-CH_2-CH_2-Y'_1$ ist, $Y'_1$-Cl, $-OSO_3H$ oder $-OCOCH_3$ bedeutet, $R_2$ und $R_3$ unabhängig voneinander Wasserstoff, Sulfo, Carboxy,

Amino, Chlor, Methoxy oder Methyl sind, $R_4$ Wasserstoff oder $C_1$-$C_4$-Alkyl bedeutet und w die Zahl 0 oder 1 darstellt, steht.

**21.** Verfahren gemäss einem der Ansprüche 1 bis 20, dadurch gekennzeichnet, dass man die Verseifung im Schritt b) bei einem pH-Wert von 12 bis 14 und einer Temperatur von 50 bis 120°C, vorzugsweise 60 bis 100°C und besonders bevorzugt 80 bis 100°C, durchführt.

**22.** Verfahren gemäss einem der Ansprüche 1 bis 21, dadurch gekennzeichnet, dass man die alkalische Verseifung der Verbindung der Formel (13a) im Schritt b) innerhalb von 30 Minuten bis 2 Stunden durchführt.

**23.** Verfahren zur Herstellung von Verbindungen der Formel (1) gemäss Anspruch 1, welche 2 oder 3 Sulfogruppen aufweisen und worin D ein unsubstituierter oder durch Sulfo, Chlor, Methyl und/oder Methoxy substituierter Rest eines Benzols oder Naphthalins ist, die Ringe (A) und (B) unabhängig voneinander keine weiteren Substituenten tragen oder durch Sulfo, Nitro, Chlor, Methyl und/oder Methoxy weitersubstituiert sind, X die Oxy- oder Carbonyloxygruppe bedeutet, Me für ein Kupferion steht, p, q und r unabhängig voneinander jeweils die Zahl 0 oder 1 bedeuten, wobei die Summe von (p+q+r) gleich der Zahl 1 ist, $X_1$ Chlor oder Fluor ist, und Y Amino, N-$C_1$-$C_4$-Alkyl- oder N,N-Di-$C_1$-$C_4$-Alkylamino, wobei das Alkyl gegebenenfalls durch Sulfo, Sulfato, Hydroxy, Carboxy oder Phenyl substituiert ist, Cyclohexylamino, Phenyl- oder Naphthylamino, welches gegebenenfalls durch $C_1$-$C_4$-Alkyl, $C_1$-$C_4$-Alkoxy, Amino, Carboxy, Sulfo und/oder Halogen substituiert ist, N-$C_1$-$C_4$-Alkyl-N-phenylamino, wobei das Alkyl und Phenyl jeweils unsubstituiert oder unabhängig voneinander wie oben geschildert substituiert sind, Morpholino oder einen Rest der Formel

$$-NR_6-(alk-O)_w-alk'-SO_2-Z \quad (9),$$

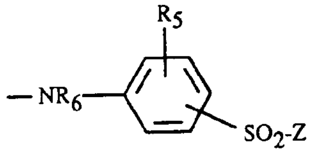

(10)

oder

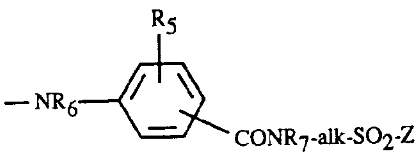

(11)

worin $R_6$ und $R_7$ unabhängig voneinander je Wasserstoff oder $C_1$-$C_4$-Alkyl sind, alk und alk' unabhängig voneinander $C_2$-$C_6$-Alkylen bedeuten, w 0 oder 1 ist, Z Vinyl oder einen Rest der Formel $-CH_2-CH_2-Y_1$ bedeutet, $Y_1$ für einen Rest -Cl, -Br, $-OSO_3H$, $-SSO_3H$, $-OPO_3H_2$, $-OCO-CH_3$ oder $OCO-C_6H_5$ steht und $R_6$ Wasserstoff, Sulfo, Methoxy oder Methyl ist, bedeutet, dadurch gekennzeichnet, dass man

a) eine Verbindung der Formel

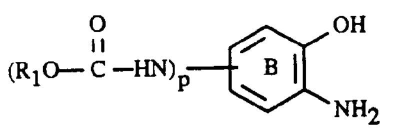

(2a)

in an sich bekannter Weise diazotiert, bei einer Temperatur von 0 bis 40°C und einem pH-Wert von 6 bis 8 mit einer Verbindung der Formel

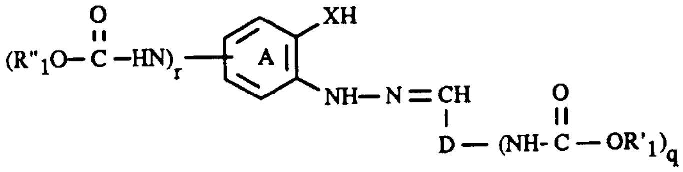

(3a)

kuppelt und vor, während oder nach der Kupplung eine Kupfer-abgebende Verbindung zusetzt,

b) die gemäss a) erhaltene Formazanverbindung, die in Form der freien Säure der Formel

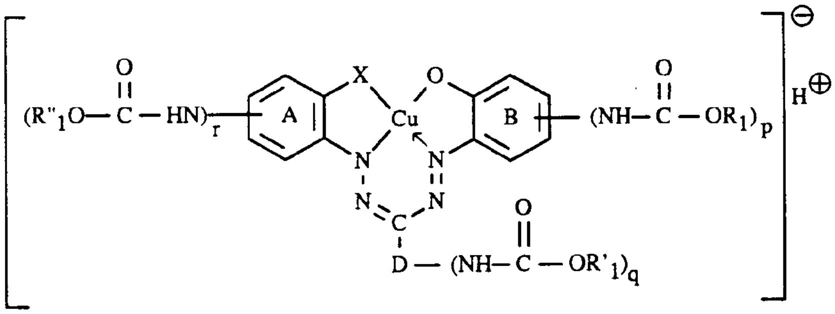

(13a')

entspricht, innerhalb von 30 Minuten bis 2 Stunden alkalisch bei einem pH-Wert von 12 bis 14 und einer Temperatur von 60 bis 100°C verseift, und

c) die gemäss b) erhaltene Aminoformazanverbindung bei einem pH-Wert von 3 bis 7 und einer Temperatur von 0 bis 50°C mit einer Verbindung

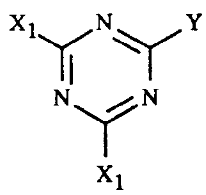

(8)

umsetzt, wobei D, (A), (B), X, $X_1$, Y, p, q und r jeweils die oben angegebene Bedeutung haben, $R_1$, $R'_1$ und $R''_1$ unabhängig voneinander je $C_1$-$C_4$-Alkyl oder unsubstituiertes oder durch Methyl, Ethyl, Methoxy, Ethoxy, Chlor und/oder Sulfo substituiertes Phenyl bedeuten und wobei die Komponenten der Formeln (2a) und (3a) so gewählt werden, dass die resultierende Formazanverbindung der Formel (1) 2 oder 3 Sulfogruppen enthält.

**24.** Verfahren zur Herstellung von Verbindungen der Formel (1') gemäss Anspruch 13, dadurch gekennzeichnet, dass man

a) eine Verbindung der Formel

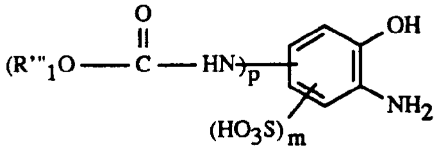

(2b)

in an sich bekannter Weise diazotiert, bei einer Temperatur von 0 bis 40°C und einem pH-Wert von 6 bis 8 mit einer Verbindung der Formel

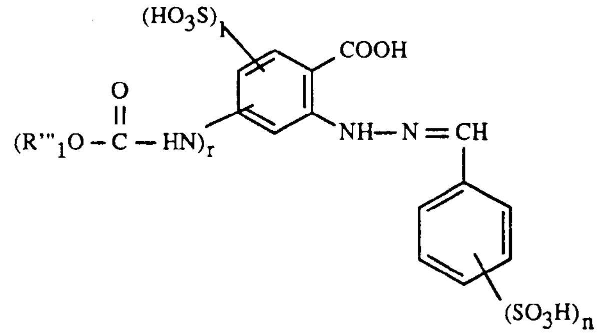

(3b)

kuppelt und vor oder während der Kupplungsreaktion ein Kupfersalz von Mineralsäuren oder niederen Fettsäuren zusetzt,

b) die gemäss a) erhaltene Formazanverbindung, die in Form der freien Säure der Formel

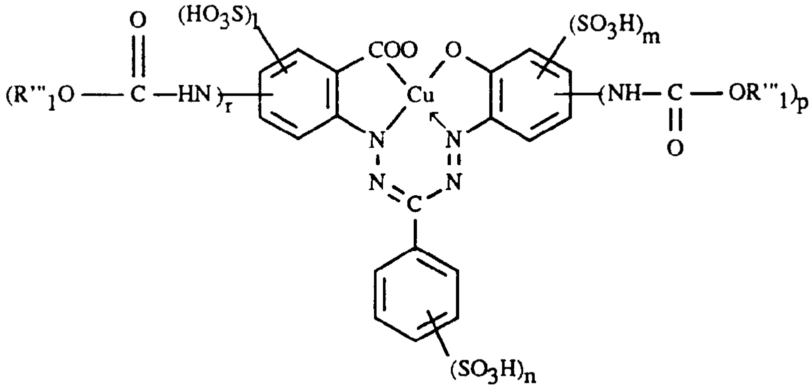

(13b')

entspricht, innerhalb von 30 Minuten bis 2 Stunden alkalisch bei einem pH-Wert von 12 bis 14 und einer Temperatur von 80 bis 100°C verseift, und

c) die gemäss b) erhaltene Aminoformazanverbindung bei einem pH-Wert von 3 bis 7 und einer Temperatur von 0 bis 50°C mit einer Verbindung der Formel

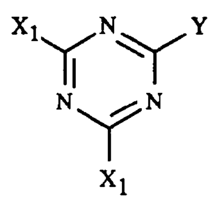

(8)

umsetzt, worin $R'''_1$ Ethyl oder Phenyl bedeutet, eine der Variablen p und r für die Zahl 1 und die andere für die Zahl 0 steht, $X_1$ Chlor oder Fluor ist und Y für einen Rest $-NH_2$ oder für einen Rest der Formel

$$-NH-(CH_2-CH_2-O-)_wCH_2-CH_2-Z' \qquad (9')$$

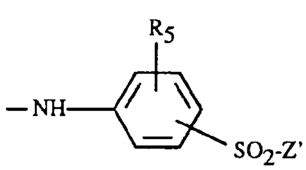

(10')

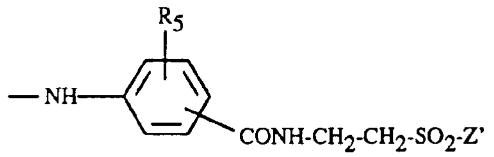

(11')

oder

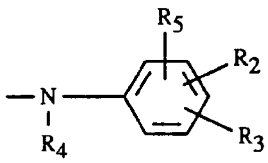

(12),

worin $R_5$ Wasserstoff, Sulfo, Methoxy oder Methyl bedeutet, Z' Vinyl oder ein Rest $-CH_2-CH_2-Y'_1$ ist, $Y'_1$ -Cl, $-OSO_3H$ oder $-OCOCH_3$ bedeutet, $R_2$ und $R_3$ unabhängig voneinander Wasserstoff, Sulfo, Carboxy, Amino, Chlor, Methoxy oder Methyl sind, $R_4$ Wasserstoff oder $C_1$-$C_4$-Alkyl bedeutet und w die Zahl 0 oder 1 darstellt, steht.

**25.** Verbindungen, die in Form der freien Säure der Formel

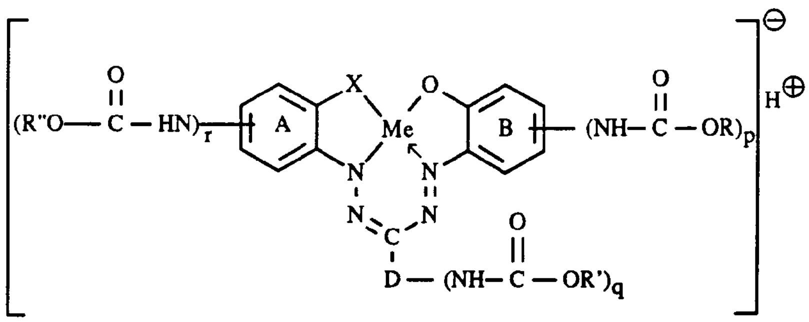

(13a)

entsprechen und worin D, (A), (B), Me, X, R, R', R", p, q und r die im Anspruch 1 angegebene Bedeutung haben, mit der Massgabe, dass R" keinen Methylrest darstellt.

## Claims

**1.** A process for the preparation of fibre-reactive formazan dyes which, in the form of the free acid, have the formula

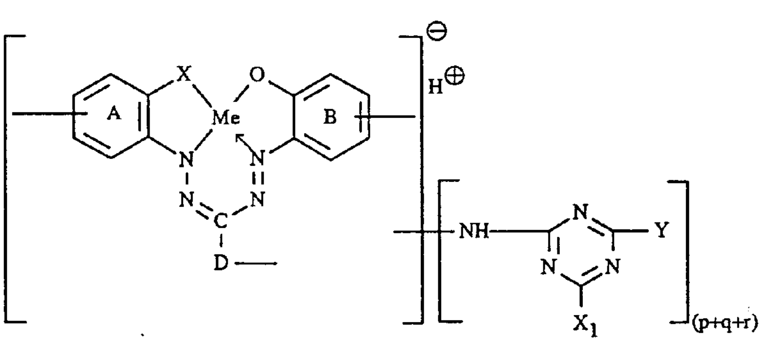

(1)

and contain 1 to 4 sulfo groups, in which formula D is the radical of a benzene or naphthalene which is

further substituted or is unsubstituted or the radical of a heterocyclic-aromatic compound, X is a sulfo group or an oxy or carbonyloxy group, Me is a heavy metal ion of atomic number 24 to 30, p, q and r independently of one another are each the number 0 or 1, the sum of (p+q+r) being 1 or 2, $X_1$ is halogen, Y independently is as defined for $X_1$ or is an amino or alkoxy radical and the rings (A) and (B) can carry further substituents as well as the groups shown, which comprises

a) diazotizing a compound of the formula

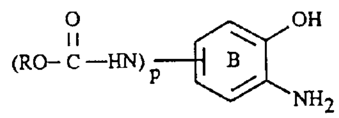

(2)

coupling the product with a coupling component of the formula

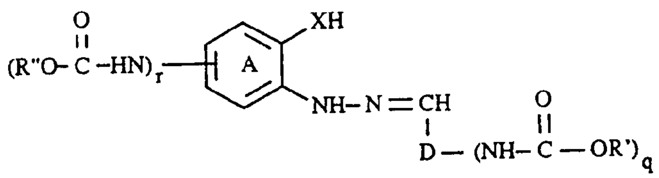

(3)

and adding a heavy metal Me donor before, during or after the coupling reaction,

b) saponifying, under alkaline conditions, the formazan compound obtained in a), which, in the form of the free acid, has the formula

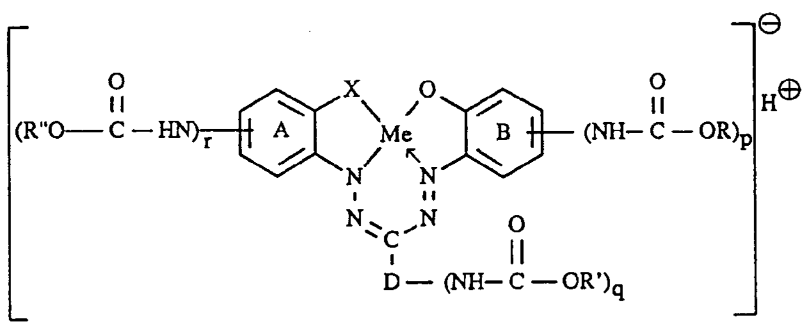

(13a)

and

c) reacting the compound obtained in b) of the formula

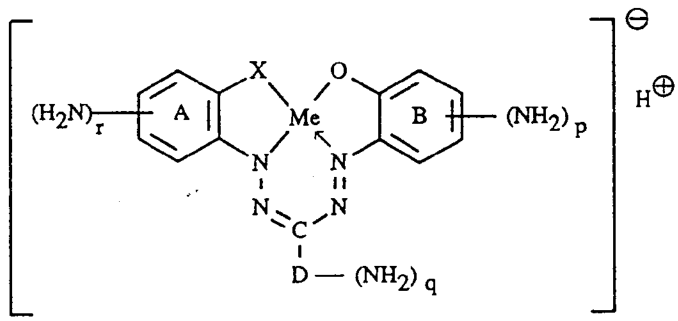

(13)

with at least (p+q+r) equivalents of a compound of the formula

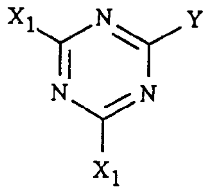

(8)

D, X, $X_1$, Y, Me, p, q, r, (A) and (B) each being as defined under the formula (1), R, R' and R" independently of one another each being substituted or unsubstituted $C_1$-$C_4$alkyl, substituted or unsubstituted aryl or $C_7$-$C_{12}$aralkyl and the components of the formulae (2) and (3) being so chosen that the resulting formazan compound of the formula (1) contains 1 to 4 sulfo groups.

2. A process according to claim 1, wherein D is a radical of a benzene or naphthalene which is unsubstituted or is substituted by $C_1$-$C_4$alkyl, $C_1$-$C_4$alkoxy, halogen, hydroxyl, carboxyl, $C_2$-$C_5$alkoxycarbonyl, $C_2$-$C_5$alkanoylamino, sulfo, nitro, cyano and/or trifluoromethyl.

3. A process according to either of claims 1 to 2, wherein D is a radical of a benzene or naphthalene which is unsubstituted or is substituted by sulfo, chlorine, methyl and/or methoxy.

4. A process according to any one of claims 1 to 3, wherein D is a radical of a benzene which is unsubstituted or is substituted by sulfo.

5. A process according to any one of claims 1 to 4, wherein the rings (A) and (B) independently of one another each carry no further substituents or are substituted further by halogen, $C_1$-$C_4$alkyl, $C_1$-$C_4$alkoxy, nitro, cyano, trifluoromethyl, carboxyl, sulfo, sulfamoyl, N-mono-$C_1$-$C_4$alkylsulfamoyl , N,N-di-$C_1$-$C_4$alkylsulfamoyl, $C_1$-$C_4$alkylsulfonyl, phenylsulfonyl and/or phenoxy.

6. A process according to any one of claims 1 to 5, wherein the rings (A) and (B) independently of one another each carry no further substituents or are substituted further by sulfo, nitro, chlorine, methyl and/or methoxy.

7. A process according to any one of claims 1 to 6, wherein the rings (A) and (B) independently of one another carry no further substituents or are substituted further by sulfo.

8. A process according to any one of claims 1 to 7, wherein X is the oxy group or preferably the carbonyloxy group.

9. A process according to any one of claims 1 to 8, wherein Me is a chromium, cobalt, nickel, zinc, manganese or copper ion, preferably a copper ion.

10. A process according to any one of claims 1 to 9, wherein the compounds of the formula (1) contain 2 or 3, preferably 2, sulfo groups.

11. A process according to any one of claims 1 to 10, wherein the sum of (p+q+r) is the number 1.

12. A process according to claim 11, wherein q is 0 and one of the two variables p and r is the number 1 and the other is the number zero.

13. A process according to claim 1 for the preparation of compounds which, in the form of the free acid, have the formula

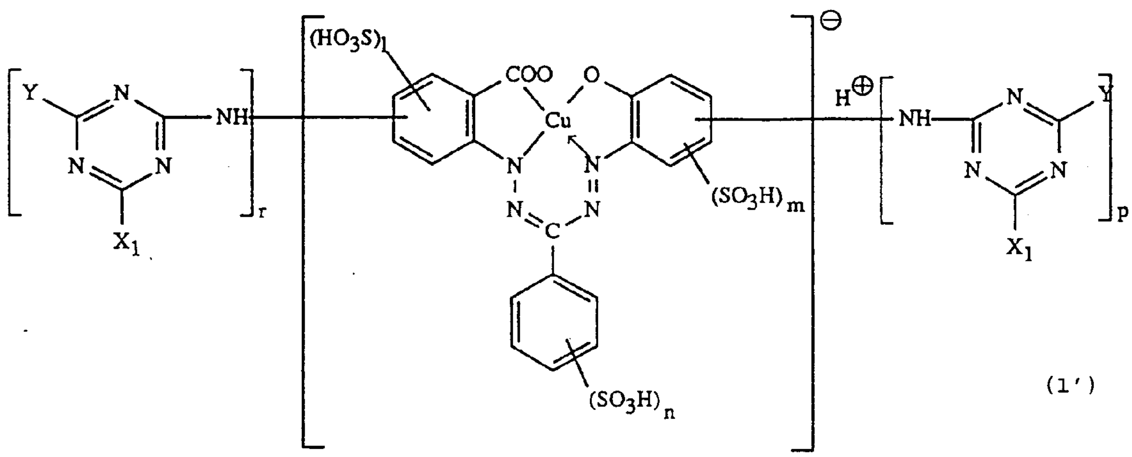

(1')

in which l, m and n independently of one another are the number 0, 1 or 2 and the sum of (l+m+n) is an integer from 1 to 4, preferably 2 or 3 and particularly preferably 2, and one of the two variables p and r is the number 1 and the other is the number 0.

**14.** A process according to claim 13, wherein p is the number 1 and r is the number 0.

**15.** A process according to any one of claims 1 to 14, wherein R, R' and R" independently of one another are each $C_1$-$C_4$alkyl which is unsubstituted or is substituted by hydroxyl, carboxyl, cyano, sulfo, sulfato or halogen, or phenyl or naphthyl which is unsubstituted or is substituted by $C_1$-$C_4$alkyl, $C_1$-$C_4$alkoxy, halogen, sulfo and/or carboxyl, or benzyl.

**16.** A process according to any one of claims 1 to 15, wherein R, R' and R" independently of one another are each $C_1$-$C_4$alkyl, preferably ethyl.

**17.** A process according to any one of claims 1 to 15, wherein R, R' and R" independently of one another are each phenyl which is unsubstituted or is substituted by methyl, ethyl, methoxy, ethoxy, chlorine and/or sulfo.

**18.** A process according to any one of claims 1 to 15, wherein R, R' and R" are each ethyl or phenyl.

**19.** A process according to any one of claims 1 to 18, wherein Y is amino, N-$C_1$-$C_4$alkylamino or N,N'-di-$C_1$-$C_4$alkylamino in which the alkyl is unsubstituted or substituted by sulfo, sulfato, hydroxyl, carboxyl or phenyl, cyclohexylamino, phenylamino or naphthylamino which is unsubstituted or substituted by $C_1$-$C_4$alkyl, $C_1$-$C_4$alkoxy, amino, carboxyl, sulfo and/or halogen, N-$C_1$-$C_4$alkyl-N-phenylamino in which the alkyl and phenyl are each unsubstituted or, independently of one another, are substituted as described above, morpholino or a radical of the formula

$$-NR_6\text{-(alk-O)}_w\text{-alk'-}SO_2\text{-Z} \quad (9),$$

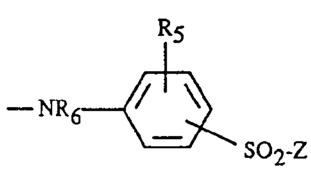

(10)

or

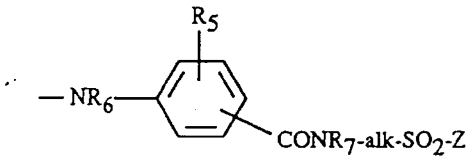

(11)

in which $R_6$ and $R_7$ independently of one another are each hydrogen or $C_1$-$C_4$alkyl, alk and alk' independently of one another are $C_2$-$C_6$alkylene, w is 0 or 1, Z is vinyl or a radical of the formula $-CH_2-CH_2-Y_1$, $Y_1$ is a radical -Cl, -Br, $-OSO_3H$, $-SSO_3H$, $-OPO_3H_2$, $-OCO-CH_3$ or $OCO-C_6H_5$ and $R_5$ is hydrogen, sulfo, methoxy or methyl.

**20.** A process according to claim 19, wherein Y is a radical $-NH_2$ or a radical of the formula

$$-NH-(CH_2-CH_2-O-)_wCH_2-CH_2-Z' \qquad (9')$$

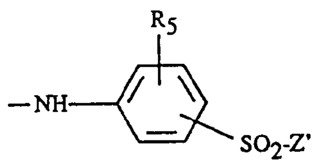

(10')

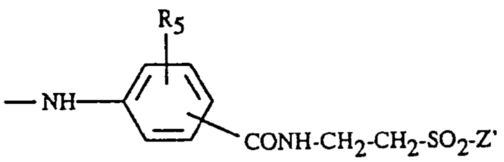

(11')

or

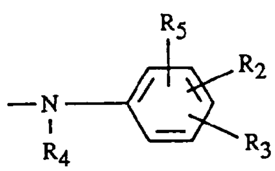

(12)

in which $R_5$ is as defined in claim 19, Z' is vinyl or a radical $-CH_2-CH_2-Y'_1$, $Y'_1$ is -Cl, $-OSO_3H$ or $-OCOCH_3$, $R_2$ and $R_3$ independently of one another are hydrogen, sulfo, carboxyl, amino, chlorine, methoxy or methyl, $R_4$ is hydrogen or $C_1$-$C_4$alkyl and w is the number 0 or 1.

**21.** A process according to any one of claims 1 to 20, wherein the saponification in step b) is carried out at a pH from 12 to 14 and a temperature from 50 to 120°C, preferably 60 to 100°C and particularly preferably 80 to 100°C.

**22.** A process according to any one of claims 1 to 21, wherein the alkaline saponification of the compound of the formula (13a) in step b) is carried out in 30 minutes to 2 hours.

**23.** A process for the preparation of compounds of the formula (1) according to claim 1, which contain 2 or 3 sulfo groups and in which D is a radical of a benzene or naphthalene which is unsubstituted or is substituted by sulfo, chlorine, methyl and/or methoxy, the rings (A) and (B) independently of one another carry no further substituents or are substituted further by sulfo, nitro, chlorine, methyl and/or methoxy, X is the oxy or carbonyloxy group, Me is a copper ion, p, q and r independently of one another are each the number 0 or 1, the sum of (p+q+r) being the number 1, $X_1$ is chlorine or fluorine and Y is amino, N-$C_1$-$C_4$alkylamino or N,N-di-$C_1$-$C_4$alkylamino in which the alkyl is unsubstituted or substituted by sulfo, sulfato, hydroxyl, carboxyl or phenyl, cyclohexylamino, phenylamino or naphthylamino which is unsubstituted or substituted

by $C_1$-$C_4$alkyl, $C_1$-$C_4$alkoxy, amino, carboxyl, sulfo and/or halogen, N-$C_1$-$C_4$alkyl-N-phenylamino in which the alkyl and phenyl are each unsubstituted or independently of one another are substituted as described above, morpholino or a radical of the formula

$$-NR_6-(alk-O)_w-alk'-SO_2-Z \qquad (9),$$

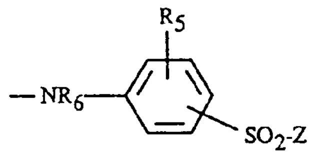

(10)

or

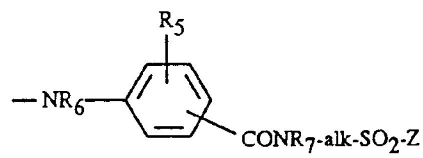

(11)

in which $R_6$ and $R_7$ independently of one another are each hydrogen or $C_1$-$C_4$alkyl, alk and alk' independently of one another are $C_2$-$C_6$alkylene, w is 0 or 1, Z is vinyl or a radical of the formula $-CH_2-CH_2-Y_1$, $Y_1$ is a radical -Cl, -Br, $-OSO_3H$, $-SSO_3H$, $-OPO_3H_2$, $-OCO-CH_3$ or $OCO-C_6H_5$ and $R_5$ is hydrogen, sulfo, methoxy or methyl, which comprises

a) diazotizing a compound of the formula

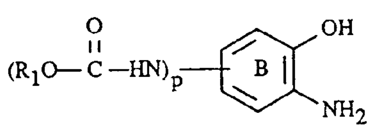

(2a)

in a manner known per se, coupling the product at a temperature from 0 to 40°C and at a pH from 6 to 8 with a compound of the formula

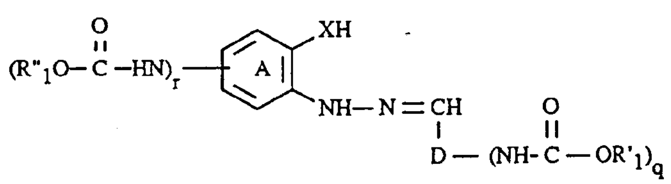

(3a)

and adding a copper donor before, during or after the coupling,

b) saponifying the formazan compound obtained in a), which, in the form of the free acid, has the formula

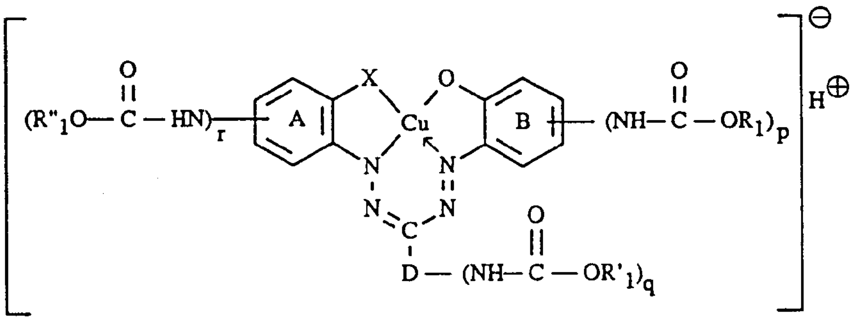

(13a')

in 30 minutes to 2 hours under alkaline conditions, at a pH from 12 to 14 and at a temperature from 60 to 100°C, and

c) reacting the aminoformazan compound obtained in b) at a pH from 3 to 7 and at a temperature from 0 to 50°C with a compound

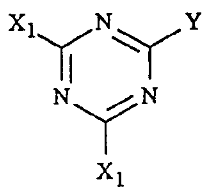

(8)

D, (A), (B), X, $X_1$, Y, p, q and r each being as defined above and $R_1$, $R'_1$ and $R''_1$ independently of one another each being $C_1$-$C_4$alkyl or phenyl which is unsubstituted or substituted by methyl, ethyl, methoxy, ethoxy, chlorine and/or sulfo and the components of the formulae (2a) and (3a) being so chosen that the resulting formazan compound of the formula (1) contains 2 or 3 sulfo groups.

**24.** A process for the preparation of compounds of the formula (1') according to claim 13, which comprises

a) diazotizing a compound of the formula

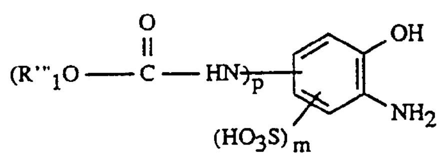

(2b)

in a manner known per se, coupling the product at a temperature from 0 to 40°C and at a pH from 6 to 8 with a compound of the formula

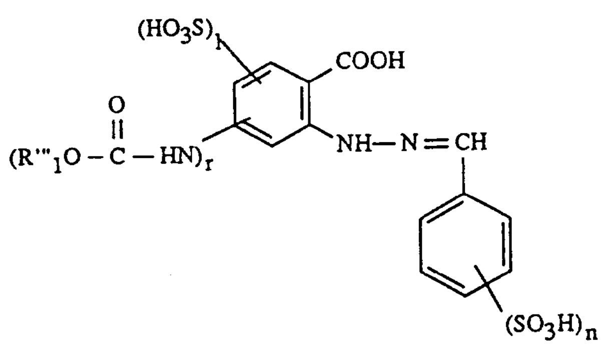

(3b)

and adding a copper salt of mineral acids or lower fatty acids before or during the coupling reaction,

b) saponifying the formazan compound obtained in a), which, in the form of the free acid, has the formula

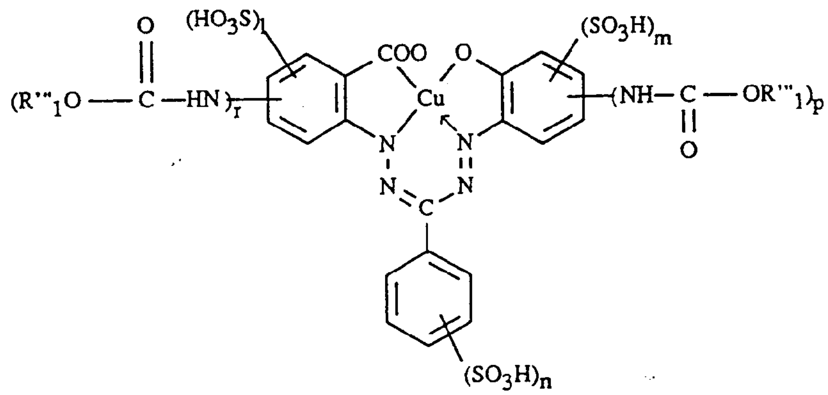

(13b')

in 30 minutes to 2 hours under alkaline conditions, at a pH from 12 to 14 and at a temperature from 80 to 100°C, and

c) reacting the aminoformazan compound obtained in b) at a pH from 3 to 7 and at a temperature from 0 to 50°C with a compound of the formula

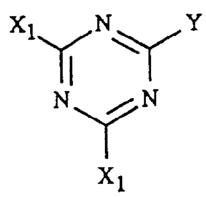

(8)

in which R'''$_1$ is ethyl or phenyl, one of the variables p and r is the number 1 and the other is the number 0, $X_1$ is chlorine or fluorine and Y is a radical $-NH_2$ or a radical of the formula

$$-NH-(CH_2-CH_2-O-)_wCH_2-CH_2-Z' \quad (9')$$

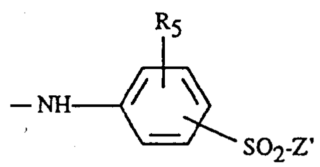

(10')

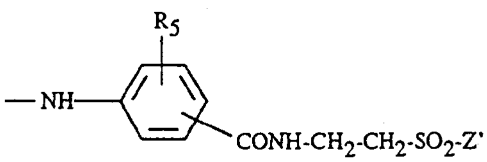

(11')

or

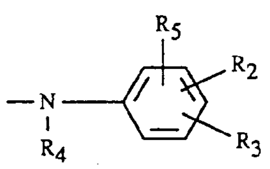

(12)

in which $R_5$ is hydrogen, sulfo, methoxy or methyl, Z' is vinyl or a radical $-CH_2-CH_2-Y'_1$, $Y'_1$ is -Cl, $-OSO_3H$ or $-OCOCH_3$, $R_2$ and $R_3$ independently of one another are hydrogen, sulfo, carboxyl, amino, chlorine, methoxy or methyl, $R_4$ is hydrogen or $C_1$-$C_4$alkyl and w is the number 0 or 1.

**25.** A compound which, in the form of the free acid, has the formula

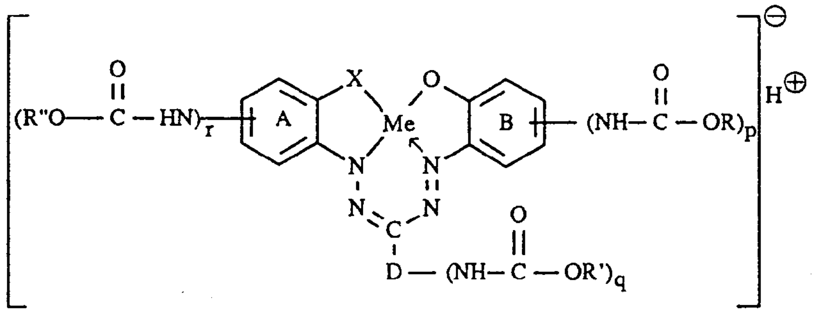

(13a)

and in which D, (A), (B), Me, X, R, R', R", p, q and r are as defined in claim 1, subject to the proviso that R" is not a methyl radical.

## Revendications

**1.** Procédé de préparation de colorants formazan aptes à réagir avec les fibres, qui, sous la forme de l'acide libre, présentent 1 à 4 groupes sulfo et répondent à la formule :

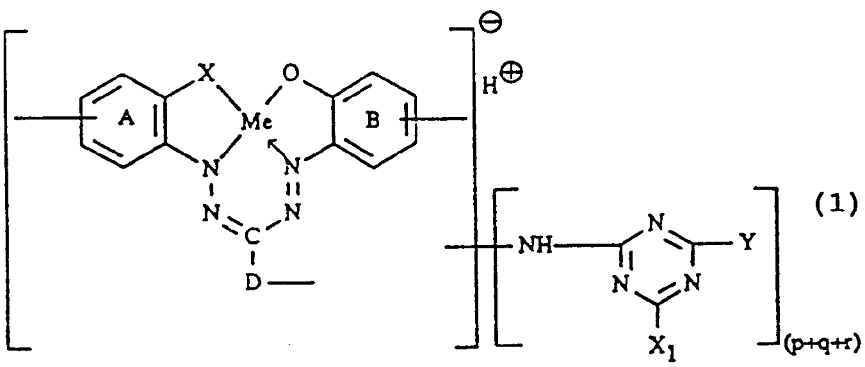

(1)

dans laquelle D représente le reste d'un benzène ou d'un naphtalène, éventuellement encore substitué, ou le reste d'un composé hétérocyclique aromatique, X représente un groupe sulfo ou un groupe oxy ou carbonyloxy, Me représente un ion d'un métal lourd de numéro atomique 24 à 30, p, q et r représentent chacun, indépendamment l'un de l'autre, le nombre 0 ou 1, la somme p + q + r étant égale à 1 ou 2, $X_1$ représente un atome d'halogène, Y a, indépendamment, la signification de $X_1$ ou représente un groupe amino ou alcoxy, et les noyaux (A) et (B) peuvent porter, outre les groupes indiqués, d'autres substituants, **caractérisé** en ce que :

a) on diazote un composé de formule :

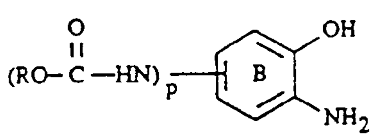

(2),

on copule le dérivé diazo obtenu avec un copulant de formule :

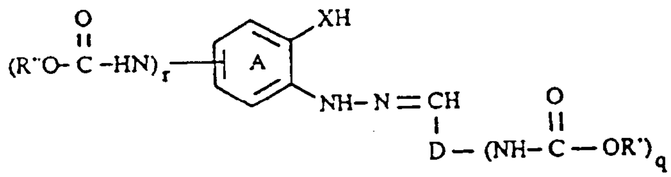

(3),

et, avant, pendant ou après la réaction de copulation, on ajoute un agent fournissant le métal lourd Me,
b) on saponifie en milieu alcalin le composé formazan obtenu selon a), qui, sous la forme de l'acide libre, répond à la formule :

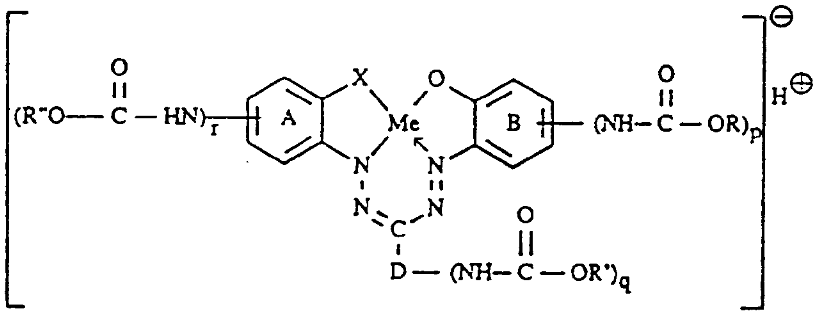

(13a),

et
c) on fait réagir le composé obtenu selon b), qui répond à la formule :

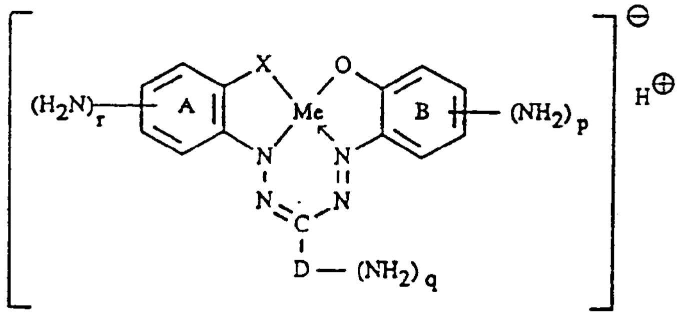

(13),

avec au moins (p + q + r) équivalents d'un composé de formule :

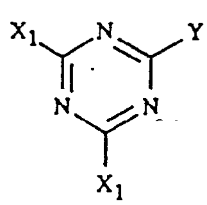

(8)

D, X, $X_1$, Y, Me, p, q, r, (A) et (B) ayant chacun la signification indiquée à propos de la formule (1), R, R' et R" représentant chacun, indépendamment l'un de l'autre, un groupe alkyle en $C_1$ à $C_4$, éventuellement substitué, un groupe aryle éventuellement substitué ou un groupe aralkyle en $C_7$ à $C_{12}$, éventuellement substitué, et les constituants de formules (2) et (3) étant choisis de telle manière que le composé formazan résultant de formule (1) contienne 1 à 4 groupes sulfo.

2. Procédé selon la revendication 1, **caractérisé** en ce que D représente un reste d'un benzène ou d'un naphtalène, non-substitué ou substitué par un ou plusieurs substituants pris parmi les atomes d'halogène et les groupes alkyle en $C_1$ à $C_4$, alcoxy en $C_1$ à $C_4$, hydroxy, carboxy, alcoxycarbonyle en $C_2$ à $C_5$, alcanoylamino en $C_2$ à $C_5$, sulfo, nitro, cyano et trifluorométhyle.

3. Procédé selon la revendication 1 ou 2, **caractérisé** en ce que D représente un reste d'un benzène ou d'un

naphtalène, non-substitué ou substitué par un ou plusieurs substituants pris parmi l'atome de chlore et les groupes sulfo, méthyle et méthoxy.

4. Procédé selon l'une quelconque des revendications 1 à 3, **caractérisé** en ce que D représente un reste d'un benzène non-substitué ou substitué par un groupe sulfo.

5. Procédé selon l'une quelconque des revendications 1 à 4, **caractérisé** en ce que les noyaux (A) et (B), indépendamment l'un de l'autre, ne portent pas d'autres substituants ou sont encore substitués par un ou plusieurs substituants pris parmi les atomes d'halogène et les groupes alkyle en $C_1$ à $C_4$, alcoxy en $C_1$ à $C_4$, nitro, cyano, trifluorométhyle, carboxy, sulfo, sulfamoyle, N-monoalkyl($C_1$ à $C_4$)sulfamoyle, N,N-dialkyl($C_1$ à $C_4$)sulfamoyle, alkylsulfonyle en $C_1$ à $C_4$, phénylsulfonyle et phénoxy.

6. Procédé selon l'une quelconque des revendications 1 à 5, **caractérisé** en ce que les noyaux (A) et (B), indépendamment l'un de l'autre, ne portent pas d'autres substituants ou sont encore substitués par un ou plusieurs substituants pris parmi l'atome de chlore et les groupes sulfo, nitro, méthyle et méthoxy.

7. Procédé selon l'une quelconque des revendications 1 à 6, **caractérisé** en ce que les noyaux (A) et (B), indépendamment l'un de l'autre, ne portent pas d'autres substituants ou sont encore substitués par un groupe sulfo.

8. Procédé selon l'une quelconque des revendications 1 à 7, **caractérisé** en ce que X représente le groupe oxy ou, de préférence, le groupe carbonyloxy.

9. Procédé selon l'une quelconque des revendications 1 à 8, **caractérisé** en ce que Me représente un ion de chrome, de cobalt, de nickel, de zinc, de manganèse ou de cuivre, et, de préférence, un ion de cuivre.

10. Procédé selon l'une quelconque des revendications 1 à 9, **caractérisé** en ce que les composés de formule (1) présentent deux ou trois groupes sulfo et, de préférence, deux groupes sulfo.

11. Procédé selon l'une quelconque des revendications 1 à 10, **caractérisé** en ce que la somme (p + q + r) est égale au nombre 1.

12. Procédé selon la revendication 11, **caractérisé** en ce que q est égal à 0, l'une des deux variables p et r est égale à 1 et l'autre est égale à 0.

13. Procédé selon la revendication 1 pour la préparation de composés qui, sous la forme de l'acide libre, répondent à la formule :

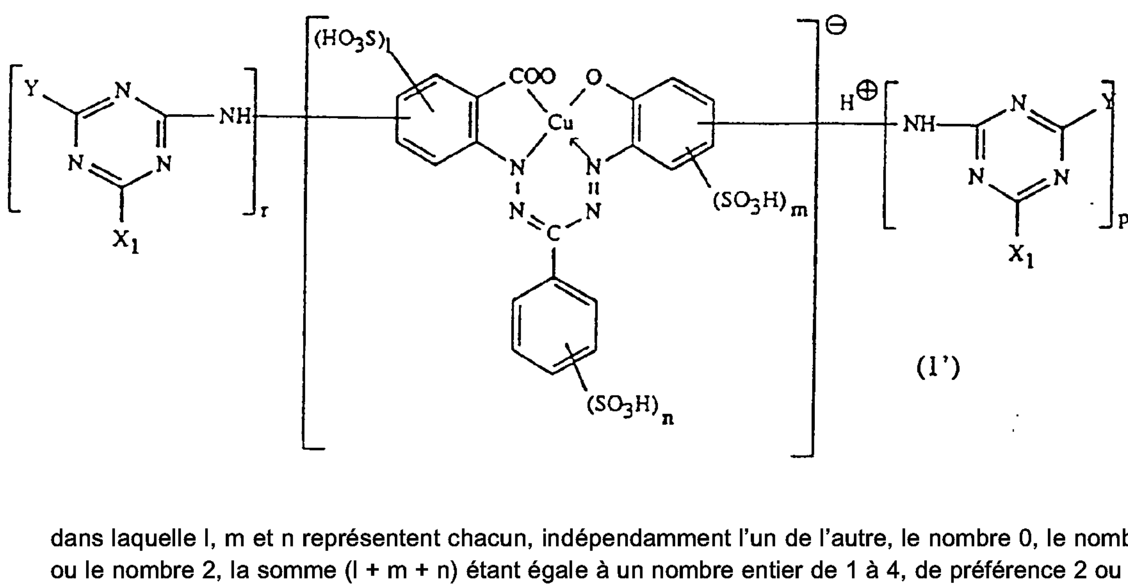

(1')

dans laquelle l, m et n représentent chacun, indépendamment l'un de l'autre, le nombre 0, le nombre 1 ou le nombre 2, la somme (l + m + n) étant égale à un nombre entier de 1 à 4, de préférence 2 ou 3, et en particulier 2, et l'une des deux variables p et r est égale à 1, l'autre étant égale à 0.

**14.** Procédé selon la revendication 13, **caractérisé** en ce que p est égal à 1 et r est égal à 0.

**15.** Procédé selon l'une quelconque des revendications 1 à 14, **caractérisé** en ce que R, R' et R" représentent chacun, indépendamment l'un de l'autre, un groupe alkyle en $C_1$ à $C_4$, non-substitué ou substitué par un groupe hydroxy, carboxy, cyano, sulfo ou sulfato ou par un atome d'halogène, ou un groupe phényle, naphtyle ou benzyle, non-substitué ou substitué par un ou plusieurs substituants pris parmi les groupes alkyle en $C_1$ à $C_4$, alcoxy en $C_1$ à $C_4$, sulfo et carboxy, et les atomes d'halogène.

**16.** Procédé selon l'une quelconque des revendications 1 à 15, **caractérisé** en ce que R, R' et R" représentent chacun, indépendamment l'un de l'autre, un groupe alkyle en $C_1$ à $C_4$, de préférence un groupe éthyle.

**17.** Procédé selon l'une quelconque des revendications 1 à 15, **caractérisé** en ce que R, R' et R" représentent chacun, indépendamment l'un de l'autre, un groupe phényle non-substitué ou substitué par un ou plusieurs substituants pris parmi l'atome de chlore et les groupes méthyle, éthyle, méthoxy, éthoxy et sulfo.

**18.** Procédé selon l'une quelconque des revendications 1 à 15, **caractérisé** en ce que R, R' et R" représentent chacun un groupe éthyle ou phényle.

**19.** Procédé selon l'une quelconque des revendications 1 à 18, **caractérisé** en ce que Y représente un groupe amino, un groupe N-alkyl($C_1$ à $C_4$)- ou N,N-dialkyl($C_1$ à $C_4$)amino, dans lequel la chaîne alkyle est éventuellement substituée par un groupe sulfo, sulfato, hydroxy, carboxy ou phényle, un groupe cyclohéxylamino, un groupe phényl- ou naphtylamino, qui est éventuellement substitué par un ou plusieurs substituants pris parmi les atomes d'halogène et les groupes alkyle en $C_1$ à $C_4$, alcoxy en $C_1$ à $C_4$, amino, carboxy et sulfo, un groupe N-alkyl($C_1$ à $C_4$)-N-phénylamino, dans lequel le groupe alkyle et le groupe phényle sont chacun non-substitués ou substitués, indépendamment l'un de l'autre, de la manière indiquée précédemment, un groupe morpholino ou un groupe de formule :

$$-NR_6\text{-}(alk\text{-}O)_w\text{-}alk'\text{-}SO_2\text{-}Z \qquad (9),$$

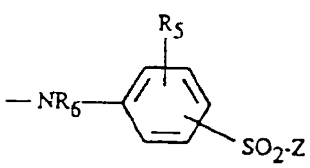

(10)

ou

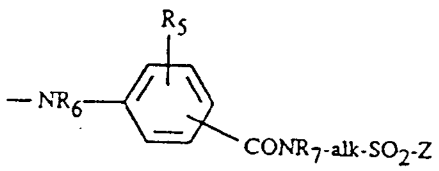

(11)

formules dans lesquelles $R_6$ et $R_7$ représentent chacun, indépendamment l'un de l'autre, un atome d'hydrogène ou un goupe alkyle en $C_1$ à $C_4$, alk et alk' représentent chacun, indépendamment l'un de l'autre, un groupe alkylène en $C_2$ à $C_6$, w est égal à 0 ou 1, Z représente un groupe vinyle ou un groupe de formule $-CH_2\text{-}CH_2\text{-}Y_1$, $Y_1$ représentant un atome de chlore ou de brome, ou un groupe $-OSO_3H$, $-SSO_3H$, $-OPO_3H_2$, $-OCO\text{-}CH_3$ ou $-OCO\text{-}C_6H_5$, et $R_5$ représente un atome d'hydrogène ou un groupe sulfo, méthoxy ou méthyle.

**20.** Procédé selon la revendication 19, **caractérisé** en ce que Y représente un groupe $-NH_2$ ou un groupe de formule :

$$-NH\text{-}(CH_2\text{-}CH_2\text{-}O\text{-})_wCH_2\text{-}CH_2\text{-}Z' \qquad (9')$$

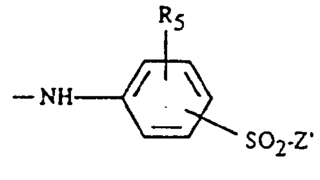

(10')

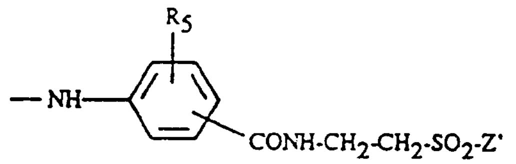

(11')

ou

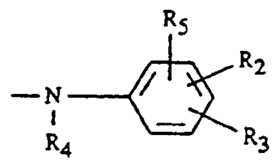

(12),

formules dans lesquelles $R_5$ a la signification indiquée dans la revendication 19, Z' représente un groupe vinyle ou un groupe $-CH_2-CH_2-Y'_1$, $Y'_1$ représentant un atome de chlore ou un groupe $-OSO_3H$ ou $-OCOCH_3$ , $R_2$ et $R_3$ représentent chacun, indépendamment l'un de l'autre, un atome d'hydrogène ou de chlore, ou un groupe sulfo, carboxy, amino, méthoxy ou méthyle, $R_4$ représente un atome d'hydrogène ou un groupe alkyle en $C_1$ à $C_4$, et w représente 0 ou 1.

**21.** Procédé selon l'une quelconque des revendications 1 à 20, **caractérisé** en ce que l'on réalise la saponification de l'étape b) à un pH de 12 à 14 et à une température de 50 à 120°C, de préférence de 60 à 100°C, et en particulier de 80 à 100°C.

**22.** Procédé selon l'une quelconque des revendications 1 à 21, **caractérisé** en ce que, dans l'étape b), on réalise la saponification en milieu alcalin du composé de formule (13a) en l'espace de 30 minutes à 2 heures.

**23.** Procédé de préparation des composés de formule (1) selon la revendication 1, qui présentent 2 ou 3 groupes sulfo et pour lesquels D représente un reste d'un benzène ou d'un naphtalène, non-substitué ou substitué par un ou plusieurs substituants pris parmi l'atome de chlore et les groupes sulfo, méthyle et méthoxy, les noyaux (A) et (B), indépendamment l'un de l'autre, ne portent pas d'autres substituants ou sont encore substitués par un ou plusieurs substituants pris parmi l'atome de chlore et les groupes sulfo, nitro, méthyle et méthoxy, X représente le groupe oxy ou carbonyloxy, Me représente un ion de cuivre, p, q et r représentent chacun, indépendamment l'un de l'autre, le nombre 0 ou 1, la somme p + q + r étant égale à 1, $X_1$ représente un atome de chlore ou de fluor, et Y représente un groupe amino, N-alkyl($C_1$ à $C_4$)- ou N,N-dialkyl($C_1$ à $C_4$)amino, la chaîne alkyle étant éventuellement substituée par un groupe sulfo, sulfato, hydroxy, carboxy ou phényle, cyclohexylamino, phényl- ou naphtylamino, qui est éventuellement substitué par un ou plusieurs substituants pris parmi les atomes d'halogène et les groupes alkyle en $C_1$ à $C_4$, alcoxy en $C_1$ à $C_4$, amino, carboxy et sulfo, N-alkyl($C_1$ à $C_4$)-N-phénylamino, dans lequel la chaîne alkyle et le groupe phényle sont chacun non-substitués ou substitués, indépendamment l'un de l'autre, de la manière indiquée précédemment, morpholino, ou un groupe de formule :

$$-NR_5-(alk-O)_w-alk'-SO_2-Z \qquad (9),$$

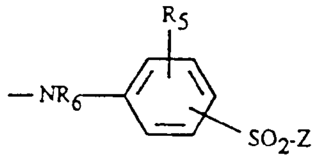

(10)

ou

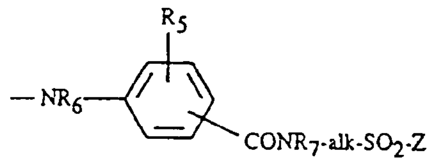

(11)

formules dans lesquelles $R_6$ et $R_7$ représentent chacun, indépendamment l'un de l'autre, un atome d'hydrogène ou un groupe alkyle en $C_1$ à $C_4$, alk et alk' représentent chacun, indépendamment l'un de l'autre, un groupe alkylène en $C_2$ à $C_6$, w représente 0 ou 1, Z représente un groupe vinyle ou un groupe de formule $-CH_2-CH_2-Y_1$, $Y_1$ représentant un atome de chlore ou de brome, ou un groupe $-OSO_3H$, $-SSO_3H$, $-OPO_3H_2$, $-OCO-CH_3$ ou $-OCOC_6H_5$, et $R_5$ représente un atome d'hydrogène ou un groupe sulfo, méthoxy ou méthyle, procédé qui est **caractérisé** en ce que :

a) on diazote d'une manière connue en soi un composé de formule :

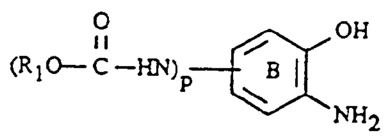

(2a) ;

on copule le dérivé diazo obtenu, à une température de 0 à 40°C et à un pH de 6 à 8, avec un composé de formule :

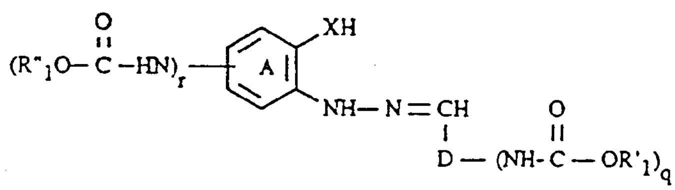

(3a)

et, avant, pendant ou après la copulation, on ajoute un composé fournissant du cuivre,

b) on saponifie en milieu alcalin, à un pH de 12 à 14 et à une température de 60 à 100°C, en l'espace de 30 minutes à 2 heures, le composé formazan obtenu selon a), qui, sous la forme de l'acide libre, répond à la formule :

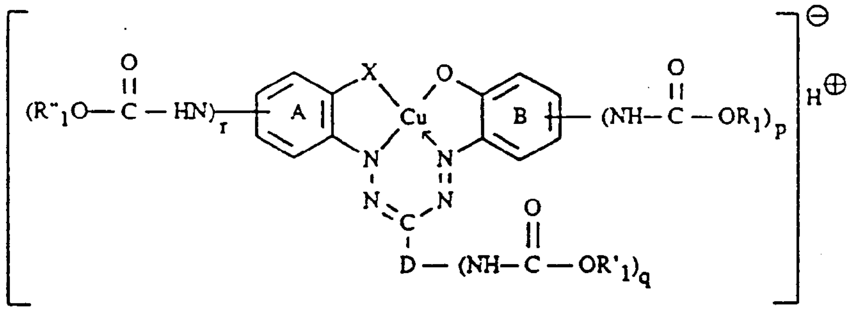

(13a')

et

c) on fait réagir, à un pH de 3 à 7 et à une température de 0 à 50°C, le composé aminoformazan obtenu selon b) avec un composé de formule :

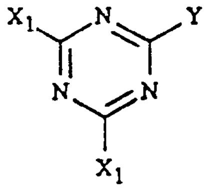

(8),

D, (A), (B), X, $X_1$, Y, p, q et r ayant chacun la signification indiquée précédemment, $R_1$, $R'_1$ et $R''_1$ représentant chacun, indépendamment l'un de l'autre, un groupe alkyle en $C_1$ à $C_4$, ou un groupe phényle non-substitué ou substitué par un ou plusieurs substituants pris parmi l'atome de chlore et les groupes méthyle, éthyle, méthoxy, éthoxy et sulfo, et les constituants de formules (2a) et (3a) étant choisis de telle manière que le composé formazan résultant de formule (1) contienne 2 à 3 groupes sulfo.

**24.** Procédé de préparation des composés de formule (1') selon la revendication 13, **caractérisé** en ce que :
a) on diazote, d'une manière connue en soi, un composé de formule :

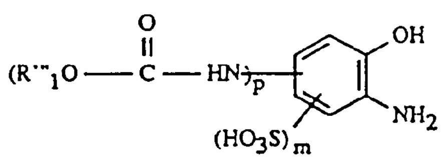

(2b),

on copule, à une température de 0 à 40°C et à un pH de 6 à 8, le dérivé diazo obtenu avec un composé de formule :

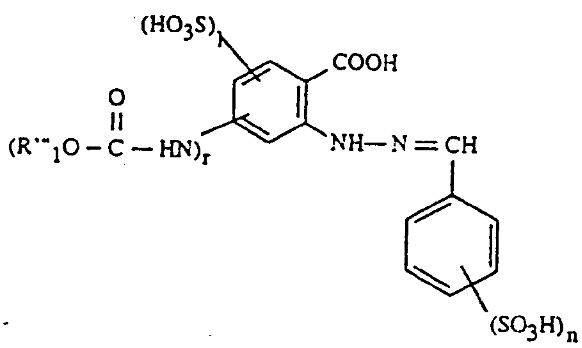

(3b)

et, avant ou pendant la réaction de copulation, on ajoute un sel de cuivre d'un acide minéral ou d'un acide gras inférieur,
b) on saponifie, dans un milieu alcalin, à un pH de 12 à 14 et à une température de 80 à 100°C, en l'espace de 30 minutes à 2 heures, le composé formazan obtenu selon a), qui, sous la forme de l'acide libre, répond à la formule :

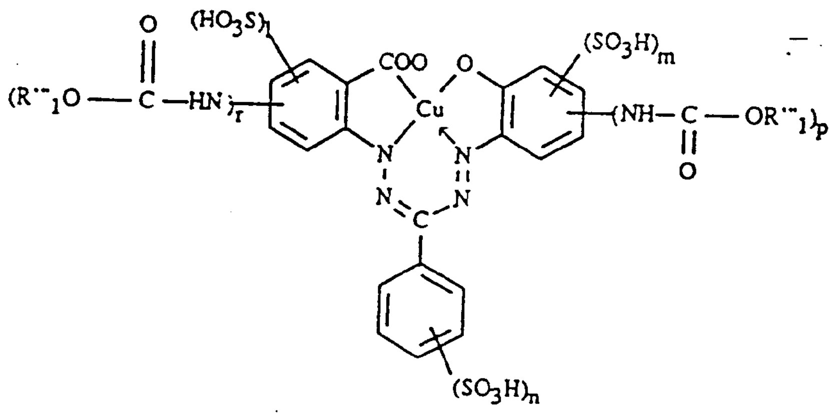

(13b')

et

c) on fait réagir, à un pH de 3 à 7 et à une température de 0 à 50°C, le composé aminoformazan obtenu selon b), avec un composé de formule :

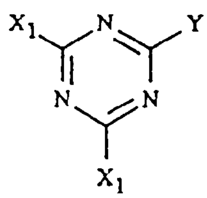

(8),

R'''$_1$ représentant un groupe éthyle ou phényle, l'une des variables p et r représentant le nombre 1 et l'autre représentant le nombre 0, $X_1$ représentant un atome de chlore ou de fluor et Y représentant un groupe $-NH_2$ ou un groupe de formule :

$$-NH-(CH_2-CH_2-O-)_wCH_2-CH_2-Z' \quad (9')$$

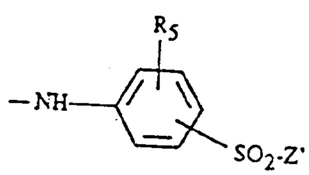

(10')

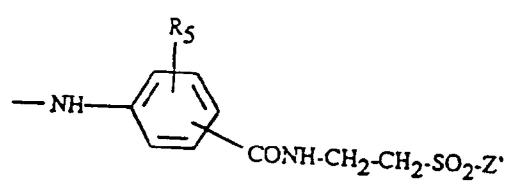

(11')

ou

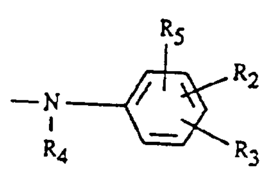

(12),

formules dans lesquelles $R_5$ représente un atome d'hydrogène ou un groupe sulfo, méthoxy ou méthyle, Z' représente un groupe vinyle ou un groupe $-CH_2-CH_2Y'_1$, $Y'_1$ représentant un atome de chlore ou un groupe $-OSO_3H$ ou $-OCOCH_3$, $R_2$ et $R_3$ représentent chacun, indépendamment l'un de l'autre, un atome d'hydrogène ou de chlore, ou un groupe sulfo, carboxy, amino, méthoxy ou méthyle, $R_4$ représente un atome

d'hydrogène ou un groupe alkyle en $C_1$ à $C_4$, et w représente le nombre 0 ou 1.

**25.** Composés qui, sous la forme de l'acide libre, répondent à la formule :

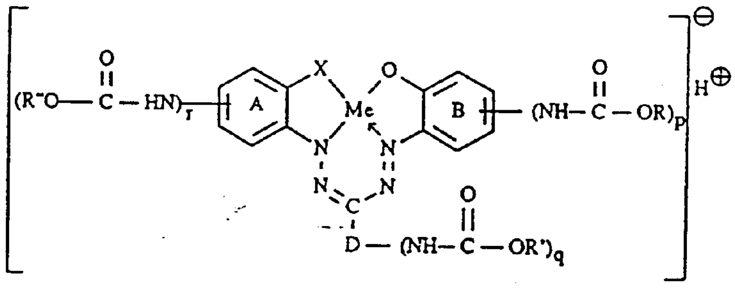

(13a)

dans laquelle D, (A), (B), Me, X, R, R', R", p, q et r ont les significations indiquées dans la revendication 1, avec la restriction que R" ne représente pas un groupe méthyle.